# EUROPEAN PATENT SPECIFICATION

(11) **EP 1 465 963 B1**
(45) Date of publication and mention of the grant of the patent: **03.03.2010**
(21) Application number: 02805935.0
(22) Date of filing: 10.12.2002
(51) Int. Cl.: C09K 9/02

(54) **PHOTOCHROMIC POLYMER COMPOSITIONS AND ARTICLES THEREOF**
FOTOCHROMISCHE POLYMERZUSAMMENSETZUNGEN UND ARTIKEL DARAUS
COMPOSITIONS POLYMERES PHOTOCHROMIQUES ET ARTICLES CORRESPONDANTS

(30) Priority: 21.12.2001 US 345166 P; 06.12.2002 US 310911
(43) Date of publication of application: 13.10.2004
(73) Proprietor: TRANSITIONS OPTICAL, INC., Pinellas Park, FL 33782 (US)
(72) Inventor: WALTERS, Robert, W., Export, PA 15632 (US); KUMAR, Anil, Pittsburgh, PA 15239 (US); BLACKBURN, Forrest, R., Monroeville, PA 15146 (US); STEWART, Kevin, J., Murrysville, PA 15668 (US)
(74) Representative: Polypatent
(86) International application number: PCT/US2002/039479
(87) International publication number: WO 2003/056390

(56) References cited:
- US-A- 6 146 554
- PATENT ABSTRACTS OF JAPAN vol. 018, no. 656 (C-1286), 13 December 1994 (1994-12-13) & JP 06 256758 A (MITSUBISHI PETROCHEM.), 13 September 1994 (1994-09-13)
- ALTOMARE A ET AL: "Synthesis and polymerization of amphiphilic methacrylates containing permanent dipole azobenzene chromophores" J POLYM SCI PART A;JOURNAL OF POLYMER SCIENCE, PART A: POLYMER CHEMISTRY SEP 1 2001, vol. 39, no. 17, 1 September 2001 (2001-09-01), pages 2957-2977, XP002245356
- PATENT ABSTRACTS OF JAPAN vol. 199, no. 506, 31 July 1995 (1995-07-31) & JP 07 062337 A (TORAY IND. INC.), 7 March 1995 (1995-03-07)

## Description

### Cross Reference to a Related Application

This application claims priority to provisional application Serial No. 60/345,166 filed on December 21, 2001.

### BACKGROUND OF THE INVENTION

The present invention relates to a photochromic polymer composition that can be used in various polymeric matrices. More particularly, this invention relates to a photochromic polymer composition that can have chemical groups that render the photochromic polymer composition reactive or more compatible with different polymeric matrices, e.g., hydrophilic or hydrophobic polymeric matrices. This invention also relates to compositions and articles containing and/or coated with compositions containing such a photochromic polymer composition.

Photochromic materials exhibit a reversible change in color when exposed to light radiation involving ultraviolet rays, such as the ultraviolet radiation in sunlight or the light of a mercury lamp. Various classes of photochromic materials have been synthesized and suggested for use in applications in which a sunlight-induced reversible color change or darkening is desired.

The general mechanism responsible for the reversible change in color, i.e., a change in the absorption spectrum in the visible range of light (400-700 nm), exhibited by different types of photochromic compounds has been described and categorized. See John C. Crano, "Chromogenic Materials (Photochromic)", Kirk-Othmer Encyclopedia of Chemical Technology, Fourth Edition, 1993, pp. 321-332. The general mechanism for the most common classes of photochromic compounds, e.g., indolino spiropyrans and indolino spirooxazines, involves an electrocyclic mechanism. When exposed to activating radiation, these compounds transform from a colorless closed ring compound into a colored open ring species. In contrast, the colored form of fulgide photochromic compounds is produced by an electrocyclic mechanism involving the transformation of a colourless open ring form into a colored closed ring form.

In the aforedescribed electrocyclic mechanisms, the photochromic compounds require an environment in which they can reversibly transform. In solid polymer matrices, the rates at which the photochromic processes of activation, i.e., formation of color or darkening, and fading, i.e., the return to the original or colorless state, occur are believed to be dependent on the free volume in the polymer matrix. The free volume of the polymer matrix is believed to be dependent upon the flexibility of the chain segments of the polymer environment surrounding the photochromic compound, i.e., the local mobility or local viscosity of the chain segments comprising the matrix. See Claus D. Eisenbach, "New Aspects of Photochromism in Bulk Polymers", Photographic Science and Engineering, 1979, pp. 183-190. One of the main obstacle reported by Claus D. Eisenbach, for the larger commercial application of photochromic systems, is the slow rate of photochromic activation and fade in a solid polymer matrix.

In recent years, photochromic articles, particularly photochromic plastic materials for optical applications, have been the subject of considerable attention. In particular, photochromic ophthalmic plastic lenses have been investigated because of the weight advantage they offer, vis-à-vis, glass lenses. Moreover, photochromic transparencies for vehicles, such as cars, boats and airplanes, have been of interest because of the potential safety features, that such transparencies offer.

Although photochromic materials and photochromic polymerizable materials of good intensity and reasonable fade are currently available, it is desirable to have photochromic materials that are less dependent upon the matrix in which they are used. It is also desirable to be able to modify the reactivity and/or compatability of such photochromic materials to more closely match that of the substrate or host material.

### DETAILED DESCRIPTION OF THE INVENTION

It is noted that, as used in this specification and the appended claims, the singular forms "a," "an," and "the" include plural referents unless expressly and unequivocally limited to one referent.

Notwithstanding that the numerical ranges and parameters setting forth the broad scope of the invention are approximations, the numerical values set forth in the specific examples are reported as precisely as possible. Any numerical value, however, inherently, contain certain errors necessarily resulting from the standard deviation found in their respective testing measurements.

The term "polymerization" is well understood by those skilled in the art. A general definition can be found in Hawley's Condensed Chemical Dictionary Thirteenth Edition, 1997, John Wiley & Sons, pages 901-902. As explained in this dictionary, polymerization can proceed in various ways, for example, but not limited to , by "addition", in which free radicals are the initiating agents that can react with a double bond of a monomer by adding to it on one side at the same time producing a new free electron on the other side,or by "condensation" which involves the splitting out of water molecules by two reacting materials. Polymerizable means that a material is capable of undergoing polymerization as described herein. Non-limiting examples of polymerizable groups include hydroxyl, carboxyl, amino, mercapto, anhydride, epoxy, isocyanato, vinyl, acryloxy, methacryloxy or a combination thereof.

In one embodiment, the photochromic polymer composition of the present invention comprises a reaction product of at least one polymerizable photochromic material and at least one other copolymerizable material, said reaction product having a glass transition temperature of less than 23°C and being adapted to provide a reduced Fade Half Life in the Photochromic Polymer Performance Test described herein in Example 5 as compared to the same photochromic material used in the reaction product, but free of polymerizable groups.

In the Photochromic Polymer Performance Test, the results for the change in optical density (ΔOD) and the Fade Half Life (T 1/2) of the test samples containing the photochromic polymer, composition are compared to the results of the test samples containing the base photochromic material, e.g., the same photochromic material used in the reaction product, but free of polymerizable groups. The change in optical density is determined according to the formula: ΔOD = log(%Tb/%Ta), where %Tb is the percent transmittance in the bleached state, %Ta is the percent transmittance in the activated state and the logarithm is to the base 10. The Fade Half Life (T 1/2) is the time interval in seconds for the change in optical density (ΔOD) of the activated form of the photochromic material in the test sample to reach one half the level of the fifteen minute ΔOD at 72°F, 22°C, after removal of the source of activating light. The Photochromic Polymer Performance Test is further described in Example 5.

In another embodiment, the photochromic polymer composition comprises a reaction product of:
a. at least one photochromic material having at least one polymerizable group; and
b. at least one material copolymerizable with the polymerizable group of (a); said material being adapted to form a polymer upon polymerization having a glass transition temperature less than 23°C;
   the reaction product being adapted to provide a reduced Fade Half Life in the Photochromic Polymer Performance Test than photochromic material (a) free of polymerizable groups.

The reduction in the Fade Half Life can vary widely. By the term "reduction' is meant that the Fade Half Life has improved by becoming shorter in the samples containing the photochromic polymer composition of the present invention as compared to the base photochromic material. In one embodiment, it can be a reduction in the Fade Half Life of 10 percent or more. In another embodiment, the Fade Half Life can be reduced by 50 percent or more, e.g., the Fade Half Life of the base photochromic material in the Photochromic Polymer Performance test is 100 seconds and for the example of the present invention is 50 seconds.

In another embodiment, the photochromic material (a) further comprises at least one other group, in addition to the polymerizable group, chosen from hydroxyl, carboxyl, amino, mercapto, anhydride, epoxy, isocyanato, acryloxy, methacryloxy, vinyl or a combination thereof.

In a further embodiment, the test sample containing the photochromic polymer composition can demonstrate a greater change in (or a higher number for) the optical density (Δ OD) after 15 minutes in the Photochromic Polymer Performance Test, described in Example 5 herein, than the comparative example containing the photochromic material free of polymerizable groups. This improvement in Δ OD can vary widely.

In a still further embodiment, the test sample containing the photochromic polymer composition can demonstrate less of a change in (or a lower number for) the optical density (Δ OD) after 15 minutes in the Photochromic Polymer Performance Test, described in Example 5 herein, than the comparative example containing the photochromic material free of polymerizable groups, provided that the Fade Half Life for the photochromic polymer composition containing sample is less than that of the comparative example.

The photochromic polymer composition of the present invention can vary widely in molecular weight. For example, in alternate non-limiting embodiments it can be characterized by, but is not limited to a weight average molecular weight of from 1,000 to one million. The weight average molecular weight of the photochromic polymer composition can range between these values, inclusive of the recited range, for example, the weight average molecular weight can range from 1,500 to 100,000 or from 3,000 to 10,000. The weight average molecular weight is determined by Gel Permeation Chromatography using polystyrene as the standards.

In one embodiment, the glass transition temperature of the reaction product is less than 23°C. In another non-limiting embodiment, the glass transition temperature of the at least one material copolymerizable with the photochromic material of (a) is adapted to form a polymer upon polymerization having a glass transition temperature of less than 23°C. In a further embodiment, the glass transition temperature of the reaction product and/or the copolymerizable material can be less than 23°C, less than 0°C, less than -50°C or any number or range of numbers within these values, for example, from -70°C to 10°C. The glass transition temperature can be determined using a DMA 2980 by TA Instruments following ASTM E-1640 Standard Test Method for Assignment of the Glass Transition Temperature by Dynamic Mechanical Analysis.

In still further alternate embodiments of the present invention, the photochromic polymer composition can be modified with the aforementioned polymerizable groups, prior to incorporation into the polymeric matrix, to make it more compatible with the polymer matrix, to react it into the polymeric matrix or to form a self-reacted polymer, as described hereinafter.

When referring to the photochromic polymer composition as being compatible with the polymeric matrix, in one non-limiting embodiment, it is meant that the combination of the photochromic polymer composition and polymeric matrix will demonstrate minimal cloudiness or haze and minimal phase separation and will be substantially more soluble and substantially more uniformly distributed throughout the matrix. The compatibility of the photochromic polymer composition with polar or hydrophilic matrices can be improved, in one embodiment, by providing the reaction product with groups such as hydroxyl, carboxyl, amino or a combination thereof, as described hereinafter.

When referring to the photochromic polymer composition as being reactive with the polymeric matrix, in one embodiment, it is meant that the photochromic polymer composition participates in a polymerization reaction and reacts or binds into the polymeric matrix. This is done to minimize extraction and/or substantially prevent leaching of the photochromic material for example, when the matrix is in contact with liquids. In one non-limiting embodiment, the photochromic polymer composition can be made reactive by providing the reaction product with one or more of the aforementioned polymerizable groups such as epoxy, isocyanato, vinyl and (meth)acryloxy, e.g., acryloxy or methacryloxy, as described hereinafter.

In a still further embodiment, there are photochromic articles comprising an at least partially cured polymerizate of the polymerizable photochromic polymer composition. The phrase "an at least partially cured" polymerizate or coating refers to the degree of curing ranging from partial to complete by whatever curing means used. In alternate embodiments, curing can be accomplished by any means known to those skilled in the art, for example, by drying, heating, exposure to actinic radiation or a combination thereof. In certain embodiments of the present invention, the degree of curing of the components can vary widely, e.g., from 5% to 100% of the possible curable components.

The polymerizable photochromic polymer composition, in one non-limiting embodiment, comprises the reaction product having at least one residual polymerizable group as described hereinafter. In another embodiment, the polymerizable photochromic polymer composition can be homopolymerized to form an at least partially cured polymerizate. In a further embodiment, the at least partially cured polymerizable photochromic polymer composition further comprises a material copolymerizable with the polymerizable photochromic polymer composition. Any type of copolymerizable material can be used to make the polymerizate as long as it comprises polymerizable groups capable of reacting with the polymerizable photochromic polymer composition. Examples of such copolymerizable materials include the materials described herein as having a glass transition temperature of less than 23°C and other materials which can have a glass transition temperature of greater than 23°C, some of which are described as host materials and substrates hereinafter. A polymerizate of homo-polymerized or copolymerized materials that includes the photochromic polymer composition of the present invention can be formed into particles of any size as described hereinafter.

In another embodiment, the particles of the present invention can be at least partially coated. The coating can be of any type such as an organic or inorganic coating. The coating can be of the type used to modify a property of the particle such as the solubility or the hydrophobic or hydrophilic nature. Non-limiting examples of such coatings include surfactants, dispersants, functionalizing polymeric coatings and protective coatings. Protective coatings, in one not limiting embodiment, can be used to prevent wear or abrasion to the particle, to protect against the effects of polymerization reaction chemicals and/or to protect against deterioration due to environmental conditions such as moisture, heat, ultraviolet light, oxygen etc. Non-limiting examples of protective coatings are discussed hereinafter and include solgel type coatings.

In a further embodiment, conventional additives such as stabilizers and other adjuvants described hereinafter can be included in the photochromic polymer composition or in the polymerizable photochromic polymer composition to aid further processing or prevent deterioration.

The photochromic materials that can be used to produce the photochromic polymer composition, in one embodiment, are photochromic materials having at least one activated absorption maxima within the range of between about 400 and 700 nanometers and which color when activated to an appropriate hue. The photochromic materials can each be used alone or in combination with one or more other photochromic materials. In one embodiment, such a combination can have one photochromic material bound to another connected by one of the spacer groups described herein.

Combinations of photochromic materials such as, in one embodiment the photochromic polymer composition with or without base photochromic materials can be used to attain certain activated colors such as a near neutral gray or brown or a fashionable color, e.g., pink, in the photochromic articles described hereinafter. Further discussion of neutral colors and ways to describe colors can be found in United States Patent 5,645,767, column 12, line 66 to column 13, line 19.

In one embodiment, polymerizable photochromic materials, such as polymerizable naphthoxazines disclosed in U.S. Patent 5,166,345 at column 3, line 36 to column 14, line 3; polymerizable spirobenzopyrans disclosed in U.S. Patent 5,236,958 at column 1, line 45 to column 6, line 65; polymerizable spirobenzopyrans and spirobenzothiopyrans disclosed in U.S. Patent 5,252,742 at column 1, line 45 to column 6, line 65; polymerizable fulgides disclosed in U.S. Patent 5,359,085 at column 5, line 25 to column 19, line 55; polymerizable naphthacenediones disclosed in U.S. Patent 5,488,119 at column 1, line 29 to column 7, line 65; polymerizable spirooxazines disclosed in U.S. Patent 5,821,287 at column 3, line 5 to column 11, line 39; polymerizable polyalkoxylated naphthopyrans disclosed in U.S. Patent 6,113,814 at column 2, line 23 to column 23, line 29; and the polymerizable photochromic compounds disclosed in WO97/05213 and Application Serial No. 09/828,260 filed April 6, 2001 can be used.

In a further embodiment, the Photochromic materials can include the following classes of materials, each of which can be substituted with at least one of the aforementioned polymerizable groups by methods described hereinafter: chromenes, e.g., naphthopyrans, benzopyrans, indenonaphthopyrans and phenanthropyrans; spiropyrans, e.g., spiro(benzindoline)naphthopyrans,
spiro(indoline)benzopyrans, spiro(indoline)naphthopyrans,
spiro(indoline)quinopyrans and spiro(indoline)pyrans;
oxazines, e.g., spiro(indoline)naphthoxazines,
spiro(indoline)pyridobenzoxazines, spiro(benzindoline)pyridobenzoxazines,
spiro(benzindoline)naphthoxazines and
spiro(indoline)benzoxazines; mercury dithizonates, fulgides, fulgimides and mixtures of such photochromic compounds. Such photochromic compounds and complementary photochromic compounds are described in U.S. Patents 4,931,220 at column 8, line 52 to column 22, line 40; 5,645,767 at column 1, line 10 to column 12, line 57; 5,658,501 at column 1, line 64 to column 13, line 17; 6,153,126 at column 2, line 18 to column 8, line 60; 6,296,785 at column 2, line 47 to column 31, line 5; 6,348,604 at column 3, line 26 to column 17, line 15; and 6,353,102 at column-1, line 62 to column 11, line 64. Spiro(indoline)pyrans are also described in the text, Techniques in Chemistry, Volume III, "Photochromism", Chapter 3, Glenn H. Brown, Editor, John Wiley and Sons, Inc., New York, 1971.

In another embodiment, other photochromic materials, each of which can be substituted with at least one polymerizable group, that can be used include organo-metal dithiozonates, i.e., (arylazo)-thioformic arylhydrazidates, e.g., mercury dithizonates which are described in, for example, U.S. Patent 3,361,706 at column 2, line 27 to column 8, line 43; and fulgides and fulgimides, e.g., the 3-furyl and 3-thienyl fulgides and fulgimides, which are described in U.S. Patent 4,931,220 at column 1, line 39 through column 22, line 41.

The disclosures relating to such photochromic compounds in the aforedescribed patents, indicated by column and line number, are incorporated herein by reference.

In alternate embodiments, the aforementioned photochromic compounds can be made reactive by the addition of the groups selected from (meth)acryloxy, isocyanato, epoxy, vinyl, anhydride, mercapto or a combination thereof. Methacryloxy or epoxy groups may be added, in one non-limiting embodiment, by reacting a hydroxyl substituted photochromic material with (meth)acryloyl chloride or (meth)acrylic anhydride in the presence of an acid acceptor to produce a (meth)acryloxy substituent or with epichlorohydrin in the presence of a base to produce an epoxy substituent. Vinyl groups may be added, by reacting the hydroxyl substituted photochromic material with a vinyl chloride or an allylbromide. An isocyanato group may be added, by reacting an amino substituted photochromic material with a difunctional isocyanate. Anhydride groups can be added to the photochromic material, by reacting an anhydride containing material that also has a group reactive with the hydroxyl substituted photochromic material.

Examples of such materials include cis-aconitic anhydride, which has a carboxylic acid group and bromomaleic anhydride, which has a bromo for reaction with the hydroxyl on the photochromic material. Marcapto groups can be added to the photochromic material by reducing a sulfo substituted photochromic material. Sulfo substituted photochromic materials can be produced by sulfonation reaction which are known to those skilled in the art.

In further alternate embodiments, the addition of polymerizable groups chosen from isocyanato, vinyl, acryloxy, methacryloxy, mercapto, epoxy, amino, carboxy and combinations thereof can be accomplished by the substitution of the base photochromic material with an' organofunctional silyl group. The organofunctional group can be added, in one non-limiting embodiment, by reacting a hydroxyl substituted photochromic with an organofunctional silane. Non-limiting examples of such silanes include isocyanatopropyltriethoxysilane, vinylmethyldiethoxysilane,
(3-acryloxypropyl)dimethylmethoxysilane,
methacryloxypropylmethyldimethoxysilane,
mercaptomethylmethyldiethoxysilane,
epoxybutyltrimethoxysilane, 4-aminobutyltriethoxysilane, carboxymethyltriethoxysilane and combinations thereof.

In one embodiment, the base photochromic material can be substituted with a silyl substituent having at least one hydrolysable groups chosen from alkoxy or halo, e.g., chloro, bromo or iodo, that upon hydrolysis form a silyl substituent having a hydroxyl group that can participate in condensation polymerization reactions. Photochromic materials having such a substituent can, in one non-limiting embodiment, be useful in the preparation of polysilane and polysiloxane polymers. In one embodiment, the photochromic material having at least one hydrolysable group can be prepared by reacting a photochromic material having a hydroxyl substituent with a silane having at least two hydrolysable groups present. Examples of such silanes include tetramethoxysilane, trimethoxychlorosilane and diethyldichlorosilane.

Additional groups that can be present on the photochromic compound, to make it more reactive and/or compatible with the copolymerizable material and/or polymeric matrix include hydroxyl, carboxyl, amino and combinations thereof. Methods for providing such substituents on the photochromic compounds known to those skilled in the art. Methods for including a carboxyl substituent on a photochromic material are disclosed in U.S. Patent 5,645,767 at column 5, line 26 to column 11, line 32; for an amino substituent are disclosed in U.S. Patent 6,080,338 at column 6, line 55 to column 13, line 10; and for a hydroxyl substituent are disclosed in U.S. Patent 6,113,814 at column 8, line 42 to column 22, line 7. The aforementioned disclosures are incorporated herein by reference.

In one embodiment, a spacer group or a non-polymerizable divalent linking group is provided between the photochromic compound and the reactive group. Non-limiting examples of a divalent linking group includes groups chosen from linear or branched chain C₁-C₂₀ alkylene, linear or branched chain C₁-C₄ polyoxyalkylene, cyclic C₃-C₂₀ alkylene, phenylene, naphthylene, C₁-C₄ alkyl substituted phenylene, mono- or poly-urethane(C₁-C₂₀) alkylene, mono- or poly-ester(C₁-C₂₀) alkylene, mono- or poly-carbonate(C₁-C₂₀)alkylene, polysilane, polysiloxane or a mixture thereof. The number of divalent linking groups can vary widely. In one non-limiting embodiment, there can be from 1 to 100 groups, or any number within this range. In some cases, the average values for these numbers can be partial numbers, e.g., 9.5.

Eamples of polymerizable photochromic compounds, disclosed in U.S. Patent 6,113,814, that can be used to prepare the photochromic polymer compositions of the present invention include the following:
a) 2,2-bis(4-methoxyphenyl)-5-(2-hydroxyethoxycarbonyl)-6-phenyl-[2H]-naphtho[1,2-b]pyran;
b) 2,2-bis(4-methoxyphenyl)-5-(2-(2-hydroxyethoxy)-ethoxycarbonyl)-6-phenyl-[2H]-naphtho[1,2-b]pyran;
c) 2,2-bis(4-methoxyphenyl)-5-(2-(2-(2-hydroxy-ethoxy)ethoxy)ethoxy-carbonyl)-6-phenyl-[2H]naphtho[1,2-b]pyran;
d) 2,2-bis(4-methoxyphenyl)-5-(2-(2-(2-(2-hydroxyethoxy)ethoxy)ethoxy)ethoxycarbonyl)-6-phenyl-[2H]-naphtho[1,2-b]pyran;
e) 2,2-bis(4-methoxyphenyl)-5-methoxycarbonyl-6-(2-hydroxyethoxy)ethoxy-[2H]-naphtho[1,2-b]pyran;
f) 2-(4-(2-(2-hydroxyethoxy)ethoxy)ethoxyphenyl)-2-phenyl-5-methoxycarbonyl-6-methyl-9-methoxy-[2H]-naphtho[1,2-b]pyran;
g) 2,2-bis(4-methoxyphenyl)-5-methoxycarbonyl-6-phenyl-9-(2-hydroxyethoxy)-[2H]-naphtho[1,2-b]pyran;
h) 2,2-bis(4-methoxyphenyl)-5-methoxycarbonyl-6-(4-(2-hydroxyethoxy)-phenyl)-[2H]-naphtho[1,2-b]pyran;
i) 3,3-di(4-methoxyphenyl)-6,11,13-trimethyl-13-(2-(2-hydroxyethoxy)ethoxy)-indeno[2,1-f]naphtho[1,2-b]pyran; and
j) 3,3-di(4-methoxyphenyl)-6,11,13-trimethyl-13-(2-(2-(2-(2-hydroxyethoxy)ethoxy)ethoxy)ethoxy)-indeno[2,1-f]naphtho[1,2-b]pyran.

The aforementioned polymerizable photochromic compounds having a hydroxyl substituent, in one non-limiting embodiment, can be used with copolymerizable materials directly or the hydroxyl group can be converted into a (meth)acryloxy, isocyanato, epoxy, vinyl or combination thereof by the aforementioned methods before reacting it with a copolymerizable material.

The photochromic polymer composition can be incorporated into the polymer matrix (polymeric host material) and/or polymer-forming coating composition by various methods described in the art. A non-limiting example of such a method includes adding the photochromic polymer composition to one or more of the materials used to form the polymer and/or coating composition. In such a method, the photochromic polymer composition can be dissolved or dispersed in an aqueous or organic solvent prior to being incorporated into one or more of the components of the polymer or coating composition. The addition of the photochromic polymer composition to the monomer components prior to polymerization is commonly referred to as a cast in place process.

In an alternate embodiment, the photochromic polymer composition can be incorporated into the polymeric host material or coating by imbibition, permeation or other transfer methods as known by those skilled in the art. The term "imbibition" or "imbibe" is intended, in one non-limiting embodiment, to mean and include permeation of the photochromic substance alone into the at least partially cured coating, solvent assisted transfer absorption of the photochromic substance into the at least partially cured coating, vapor phase transfer, and other such transfer mechanisms.

In one embodiment, the amount of the photochromic polymer composition described herein to be used in the polymeric host material and polymer-forming coating of the present invention is an amount sufficient to produce a photochromic effect discernible to the naked eye upon activation. Generally such amount can be described as a photochromic amount. The photochromic polymers compositions are used in photochromic amounts and in a ratio (when mixtures are used) such that a polymer or coating composition to which the photochromic polymer composition is applied or in which it is incorporated exhibits a desired resultant color when activated with unfiltered sunlight. Typically, the more photochromic polymer composition incorporated, the greater the color intensity is up to a certain limit. There is a point after which the addition of any more material will not have a noticeable effect.

The relative amounts of the aforesaid photochromic polymer composition used will vary and depend in part upon the relative intensities of the color of the activated species of such materials, the ultimate color desired and the method of application to the host material or substrate. Generally, the amount of total photochromic polymer composition incorporated into a polymeric matrix (coating, cast in place polymer or both) can vary widely. In one embodiment, it can range from 0.01 to 90 weight percent based on the total weight of the polymeric matrix.

The copolymerizable material to be reacted with the polymerizable photochromic material, in one non-limiting embodiment, can be a monomer of any type that has a glass transition temperature of less than 23°C upon polymerization. It can be substituted or unsubstituted, as long as it possesses a group copolymerizable with the polymerizable group on the photochromic material. A variety of substituent can be used, a non-limiting example is a hindered amine light stabilizer.

In one embodiment, the monomer selected is one that when combined with the polymerizable photochromic produces an polymer that demonstrates an improved Fade Half Life in the Photochromic Polymer Performance Test, when compared to the base photochromic material free of the polymerizable group.

Examples of monomers to be used as the copolymerizable material of the present invention include, but are not limited to, monomers having at least one reactive group chosen from hydroxyl, carboxyl, amino, mercapto, vinyl, acryloxy, methacryloxy, anhydride, epoxy, isocyanato or a combination thereof. In one non-limiting embodiment, there is at least one group on the copolymerizable material chosen from acryloxy or methacryloxy groups. In another non-limiting embodiment, a combination of acryloxy and methacryloxy groups are present. The copolymerizable material can be a comonomer of a monomer having one or more of the reactive groups listed and a different monomer. The different monomer can include reactive groups other than those listed. In another non-limiting embodiment, the copolymerizable material can be reacted with at least two polymerizable photochromic materials. An example is the reaction of photochromic materials having a hydroxyl substituent with a isocyanate terminated polymer such as isophorone diisocyanate terminated poly(1,4-butanediol) to produce a photochromic polymer having photochromic materials at both ends of the polymer.

In one embodiment, examples of the copolymerizable materials include the previously mentioned organofunctional silanes having at least one polymerizable group and/or the previously mentioned silanes having at least 2 hydrolyzable groups that could participate in the formation of polysiloxanes or silicones.

Examples of monomers to be used as the copolymerizable material include ethylenically unsaturated monomers having an additional reactive group chosen from hydroxyl, carboxyl, amino, mercapto, vinyl, acryloxy, methacryloxy, anhydride, epoxy, isocyanato or a combination thereof; ethylenically unsaturated monomers; or a combination thereof.

Examples of hydroxyl-functional ethylenically unsaturated monomers include hydroxyethyl (meth)acrylate, i.e., hydroxyethyl acrylate and hydroxyethyl methacrylate, hydroxypropyl (meth)acrylate, hydroxybutyl (meth)acrylate, hydroxymethylethyl acrylate, hydroxymethylpropyl acrylate and mixtures thereof.

Examples of other ethylenically unsaturated monomers include, but are not limited to, vinyl aromatic monomers, e.g., styrene, α-methyl styrene, t-butyl styrene and vinyl toluene; vinyl aliphatic monomers such as ethylene, propylene and 1,3-butadiene; (meth)acrylamide; (meth)acrylonitrile; vinyl and vinylidene halides, e.g., vinyl chloride and vinylidene chloride; vinyl esters, e.g., vinyl acetate; alkyl esters of acrylic and methacrylic acids having from 1 to 17 carbon atoms in the alkyl group, including methyl (meth)acrylate, ethyl (meth)acrylate, butyl (meth)acrylate, cyclohexyl (meth)acrylate, 2-ethylhexyl (meth)acrylate, isobornyl (meth)acrylate and lauryl (meth)acrylate; epoxy-functional ethylenically unsaturated monomers such as glycidyl (meth)acrylate; carboxy-functional ethylenically unsaturated monomers such as acrylic and methacrylic acids and mixtures of such ethylenically unsaturated monomers.

Anhydride functional monomers include, but are not limited to, maleic anhydride and ethylenically unsaturated monomers having anhydride functionality such as maleic anhydride, citraconic anhydride, itaconic anhydride, propenyl succinic anhydride, etc.

Mercapto-functional monomers include, but are not limited to, ethylenically unsaturated monomers having mercapto functionality, e.g. mercaptoethylmethacrylate. Isocyanato-functional monomers include, but are not limited to, ethylenically unsaturated monomers having isocyanato functionality, e.g. isocyanatoethylmethacrylate. Amino-functional monomers include, but are not limited to, ethylenically unsaturated monomers having an amino-functional groups, e.g. p-aminophenoxy-acrylate.

In one embodiment, the copolymerizable material can have one polymerizable group, two or more of the same polymerizable group or two or more of different polymerizable groups. In another embodiment, the copolymerizable group has one polymerizable group. The copolymerizable material is curable by a variety of methods that are not limited to thermal radiation, actinic radiation or a mixture thereof. A catalyst or initiator can be included if necessary, but the appropriate catalyst or initiator for the curing mechanism used would be selected as known to one skilled in the art.

In another embodiment, the photochromic polymer composition can be prepared by free radical polymerization methods or by solution polymerization techniques in the presence of suitable initiators. Such initiators are typically organic peroxides or azo compounds, for example, benzoyl peroxide or N,N-azobis(isobutyronitrile). The polymerization can be carried out in an organic solution in which the monomers are soluble by techniques conventional in the art. Alternately, the photochromic polymer composition can be prepared by aqueous emulsion or dispersion polymerization techniques well known in the art.

In one embodiment, the photochromic polymer composition can have at least one reactive group selected from hydroxyl, carboxyl, amino, mercapto, vinyl, acryloxy, methacryloxy, anhydride, epoxy, isocyanato or a combination thereof. This can be a residual group resulting from the combination of a polymerizable photochromic material with a copolymerizable material having an excess of reactive groups or of a polymerizable photochromic material having an excess of reactive groups with a copolymerizable material having at least one reactive group.

In another embodiment, depending on the polymeric matrix, the reactive groups on the photochromic polymer composition can be converted to different reactive groups to make the photochromic polymer composition more compatible. For example, a hydroxyl can be converted into a methacryloxy, so that the photochromic polymer composition can be reacted into the polymer matrix or be self polymerized to form a homopolymer or polymerized with a different photochromic polymer composition to form a co-polymer prior to incorporation into the polymeric matrix.

In a further embodiment, the homopolymer or copolymer can be formed into particles. This step can be done to produce a product that is easy to handle and that can subsequently be incorporated into a polymeric matrix. The particles can be of any size. The particle size can be determined using techniques appropriate for the size to be measured. Larger sizes can be characterized by a sieve measurement technique while smaller sizes can be done with computer assisted image analysis as known to one skilled in the art. In one non-limiting embodiment, the size can range between 0.01 to 100 µm, 0.1 to 10µm or any number within this range.

The particles can be produced by non-limiting conventional physical methods such as pulverizing the polymer or by spray-drying the polymer. Non-limiting methods utilizing a chemical process to produce particles of the polymerized photochromic polymer include emulsion polymerization, surfactant-free emulsion polymerization, nonaqueous dispersion polymerization, seed emulsion polymerization or suspension polymerization. These methods may be appropriately selected depending on the desired particle size and the characteristics of the polymerized photochromic polymer. A description of such particle forming methods is included in U.S. Patent 4,931,220 at column 7, lines 26 to 63, which disclosure is incorporated herein by reference.

In one embodiment, it may be helpful to apply a protective coating to the surface of the particles made from the photochromic polymer composition. The protective coating serves as a barrier to prevent interaction of the particle's contents with oxygen, moisture, monomers, catalysts and other chemicals used to produce the polymeric matrix and vice versa. Application of the protective coating may be by any of the methods used in coating technology such as, for example, spray coating, spin coating, spread coating, curtain coating, dip coating, casting or roll-coating.

The use of protective coatings, some of which may contain inorganic oxides, e.g., solgel products, has been described in U.S. 4,367,170 at column 5, line 46 to column 7, line 11. The use of protective colloids such as cellulose derivatives, polyacrylate salts, starch, poly(vinyl alcohol), gelatin, talc, clay and clay derivatives in suspension polymerization has been described in U.S. 4,931,220 at column 6, lines 24 to 41. Both of the aforementioned disclosures are incorporated herein by reference.

In another embodiment, stabilizers can also be incorporated into the photochromic polymer composition, prior to, simultaneously with or subsequent to incorporation of the polymerizable photochromic materials to form the reaction product. For example, ultraviolet light absorbers may be admixed with the polymerizable photochromic materials before forming the photochromic polymer composition. Further, stabilizers may be admixed with the photochromic polymer composition prior to their addition to the polymeric coating composition or polymeric matrix to improve the fatigue resistance of the photochromic compounds. Non-limiting examples of stabilizers include hindered amine light stabilizers (HALS), antioxidants, e.g., polyphenolic antioxidants, asymmetric diaryloxalamide (oxanilide) compounds and singlet oxygen quenchers, e.g., a nickel ion complex with an organic ligand, or mixtures of stabilizers are contemplated. They may be used alone or in combination. Such stabilizers are described in U.S. Patents 4,720,356, 5,391,327 and 5,770,115.

In a further embodiment, adjuvant materials may also be incorporated into the photochromic polymer composition, e.g., conventional ingredients which impart desired characteristics to the polymer, or which are required for the process used to incorporate and cure the photochromic polymer composition in the polymeric matrix or which enhance the cured polymeric matrix made therefrom. For example, in one non-limiting embodiment, plasticizers may be used to adjust the photochromic performance properties of the photochromic polymer composition in the polymeric matrix, if necessary.

Other such ingredients comprise rheology control agents, surfactants, initiators, cure-inhibiting agents, free radical scavengers and adhesion promoting agents,'such as trialkoxysilanes preferably having an alkoxy substituent of 1 to 4 carbon atoms, including γ-glycidoxypropyltrimethoxysilane,
γ-aminopropyltrimethoxysilane,
3,4-epoxycyclohexylethyltrimethoxysilane and
aminoethyltrimethoxysilane.

The photochromic polymer composition can be incorporated into polymeric matrices by various methods known to one skilled in the art. The types of polymeric matrices intended for inclusion of the photochromic polymer composition can be of any type.

In alternate embodiments, the polymeric matrix or host material can be transparent, but can also be translucent or even opaque. The host material need only be pervious to that portion of the electromagnetic spectrum, which activates the photochromic material, e.g., that wavelength of ultraviolet (UV) light that produces the open or colored form of the material and that portion of the visible spectrum that includes the absorption maximum wavelength of the material in its UV activated form, i.e., the open form.
In one non-limiting embodiment, the host color does not mask the color of the activated form of the photochromic polymer composition, e.g., so the change in color is readily apparent to the observer.

In one embodiment, the photochromic polymer composition is included in an at least partial coating of an at least partially cured photochromic coating composition on at least one surface of a substrate. The photochromic coating composition comprises a film-forming polymer coating composition used to produce thermoplastic or thermosetting film-forming polymer coatings that are described in the Kirk-Othmer Encyclopedia of Chemical Technology Kirk-Othmer Encyclopedia of Chemical Technology, Fourth Edition, Volume 6, pages 669 to 750. The phrase "an at least partial coating" means an amount of coating covering from a portion to the complete surface of the substrate. The phrase "an at least partially cured" coating composition was defined hereinbefore. The phrase "on at least one surface" of a substrate means that the coating is applied to one or more or all the surfaces of the substrate and that the applied coating can be "on" the surface of the substrate or it can be "on" and below the surface due to migration into the substrate. In one non-limiting embodiment, a protective coating can be applied to the substrate to limit migration of the coating composition components.

In another embodiment, the thermoplastic film-forming polymers for use in a coating are well known to those skilled in the art. One non-limiting example is thermoplastic polycarbonate. In a further embodiment the coating is one that upon curing forms an at least partially cured polymeric coating that is thermosetting and chosen from polyurethanes, aminoplast resins, poly(meth)acrylates, e.g., polyacrylates and polymethacrylates, polyanhydrides, polyacrylamides, and epoxy resins. Other polymer forming coating compositions contemplated for use with the photochromic polymer composition in a further embodiment include polysiloxane, polysilane and solgel coatings.

In one embodiment, the photochromic polyurethane coatings that can be used to prepare the photochromic coated articles of the present invention are those that can be produced by the catalyzed or uncatalyzed reaction of an organic polyol component and an isocyanate component in the presence of photochromic compound(s). Materials and methods for the preparation of polyurethanes are described in Ullmann's Encyclopedia of Industrial Chemistry, Fifth Edition, 1992, Vol. A21, pages 665 to 716. Non-limiting examples of organic polyols, isocyanates and other components that can be used to prepare the polyurethane coating are disclosed in U.S. Patents 4,889,413 and 6,187,444B1; European Patent 0146136B1; and Japanese Patent Applications 3-269507 and 5-28753.

In another embodiment, a photochromic aminoplast resin coating composition that can be used to produce the photochromic coated articles of the present invention can be prepared by combining the photochromic polymer composition with the reaction product of a component comprising active hydrogen groups such as a hydroxyl, carbamate, urea or a combination thereof and an aminoplast resin, e.g., crosslinking agent as described in U.S. Patents 4,756,973 and 6,432,544B1; and Japanese Patent Applications 62-226134; 3-2864 and 3-35236. Examples of functional components, aminoplast resins and other components that can be used to prepare the aminoplast resin coatings are disclosed in U.S. Patents 5,602,198, 5,663,244, 5,814,410 and 5,976,701.

Photochromic polysilane coating compositions contemplated, for use in preparing the photochromic coated articles of the present invention can be prepared by combining the photochromic polymer composition disclosed herein with silane monomers that have been hydrolyzed with or without a catalyst. Non-limiting examples of such silane monomers include glycidoxypropyltrimethoxysilane, vinyltrimethoxysilane, methacryloxypropyltrimethoxysilane, tetramethoxysilane, tetraethoxysilane and methyltrimethoxysilane as described in U.S. Patent 4,556,605.

Examples of photochromic poly(meth)acrylate coating compositions contemplated for use in preparing the photochromic coated articles of the present invention can be prepared by combining the photochromic polymer composition with monomer(s) chosen from pentaerythritol di-, tri- and tetra-acrylates, pentaerythritol di-, tri- and tetra-methacrylates, butanediol di(meth)acrylate, hexanediol di(meth)acrylate, nonanediol di(meth)acrylate, diethylene glycol dimethacrylate, triethylene glycol dimethacrylate, poly(oxyalkylene dimethacrylates), e.g., polyethylene glycol (600) dimethacrylate, ethoxylated bisphenol A dimethacrylate monomers, ethylene glycol bismethacrylate monomers, poly(ethylene glycol) bis methacrylate monomers, polyhydric alcohol polyacrylate monomers, such as trimethylol propane trimethacrylate, alkoxylated polyhydric alcohol polyacrylate monomers, such as ethoxylated trimethylol propane triacrylate monomers, urethane acrylate monomers, such as those described in U.S. Patent 5,373,033, polyfunctional, e.g., mono-, di- or multi-functional, acrylate and/or methacrylate monomers, C₁-C₁₂ alkyl methacrylates, such as methyl methacrylate, alkoxylated phenol methacrylates; polyol[(meth)acryloyl terminated carbonate]monomer, e.g., 2,5,8,10,13-pentaoxahexadec-15-enoic acid, 15-methyl-9,14-dioxo-2[(2-methyl-1-oxo-2-propenyl)oxy]ethyl ester; acrylated oligomers of epoxies, urethanes, acrylics and polyesters or a mixture thereof.

In one embodiment, a polyanhydride photochromic coating composition that can be used to prepare the photochromic coated articles of the present invention can be prepared by the reaction of hydroxyl-functional component(s) having at least two hydroxyl groups and polymeric anhydride-functional component(s) having at least two cyclic carboxylic acid anhydride groups in a composition including at least one photochromic polymer composition as described in U.S. Patent 6,432,544B1. Examples of hydroxyl-functional components, anhydride-functional component(s) and other components that can be used to prepare the polyanhydride photochromic coatings are disclosed in U.S. Patents 4,798,745, 4,798,746 and 5,239,012.

Photochromic polyacrylamide coating compositions contemplated for use in preparing the photochromic coated articles of the present invention, in one non-limiting embodiment, can be prepared by combining the photochromic polymer composition with the free radical initiated reaction product of a polymerizable ethylenically unsaturated composition comprising: a) from 25 to 80% by weight of an N-alkoxymethyl(meth)acrylamide; and b) from 20 to 75% by weight of at least one other copolymerizable ethylenically unsaturated monomer, said weight percentages being based on the total weight of the polymerizable ethylenically unsaturated monomers as described in U.S. Patent 6,060,001. Non-limiting methods for preparing N-alkoxymethyl(meth) acrylamide functional polymer are described in U.S. Patent 5,618,586. The term N-alkoxymethyl(meth)acrylamide means either N-alkoxymethylacrylamide or N-alkoxymethylmethacryl-amide.

The copolymerizable ethylenically unsaturated monomers without alkoxyacrylamide functionality used in the aforementioned polymerizable composition include, but are not limited to: vinyl aromatic monomers such as styrene, alphamethyl styrene, and tertiary butyl styrene; (meth)acrylamidobutyraldehyde dialkyl acetal monomers such as acrylamidobutyraldehyde diethyl acetal (ABDA), methacrylamidobutyraldehyde diethyl acetal (MABDA), and the like; vinyl aliphatic monomers such as ethylene, propylene, and 1,3-butadiene; poly(alkyleneglycol)(meth)acrylate, e.g., methoxypolyethylene glycol monomethacrylate; epoxy-functional monomers, e.g., glycidyl (meth)acrylate, and glycidoxypropyl (meth)acrylate; and alkyl esters of acrylic and methacrylic acid having from 1 to 17 carbon atoms in the alkyl group, including methyl (meth)acrylate, ethyl (meth)acrylate, butyl (meth)acrylate, isodecyl (meth)acrylate, cyclohexyl (meth)acrylate, 2-ethylhexyl (meth)acrylate, isobornyl (meth)acrylate and lauryl (meth)acrylate.

In one embodiment, the photochromic epoxy resin coating compositions that can be used to prepare the photochromic coated articles of the present invention can be prepared by combining the photochromic polymer composition, epoxy resins or polyepoxides and curing agents as disclosed in U.S. Patents 4,756,973 and 6,268,055B1; and United Kingdom Patent No. 1,419,985. Among the polyepoxides which can be used are epoxy-containing acrylic polymers, epoxy condensation polymers such as polyglycidyl ethers of alcohols and phenols and polyglycidyl esters of polycarboxylic acids, certain polyepoxide monomers and oligomers and mixtures of such polyepoxides. Examples of these materials are described in U.S. Patent 5,256,452 column 3, line 28 to column 4, line 46.

In one embodiment, curing agents for the photochromic epoxy resin coating composition of the present invention can be polyacid curing agents having at least two acid groups per molecule. Among the polyacid curing agents which can be used are carboxylic acid group-containing polymers such as acrylic polymers, polyesters, and polyurethanes; oligomers such as ester group-containing oligomers and monomers. Examples of such curing agents and other epoxy resin coating composition components are disclosed in U.S. Patents 4,764,430 and 5,196,485.

The foregoing photochromic polymer-forming coating compositions, used to prepare the photochromic coated articles of the present invention, can further comprise additional conventional ingredients that impart desired physical characteristics to the coating composition or the resultant cured layer; that are required for the process used to apply and cure the coating composition to the substrate; and/or that enhance the cured coating layer made therefrom. Such non-limiting additional ingredients include solvents, rheology control agents, plasticizers, leveling agents, e.g., surfactants, catalysts, e.g., polymerization initiators, e.g., thermal and photopolymerization initiators, cure-inhibiting agents, and free radical scavengers.

In one embodiment, the substrates, e.g., materials to which the coating composition is applied, can be of any type such as, for example paper, glass, ceramics, wood, masonry, textiles, metals and organic polymeric materials. In one embodiment, the substrate is a polymeric material, particularly, a solid transparent thermoset or thermoplastic polymeric materials, e.g., thermoplastic polycarbonate type polymers and copolymers, and homopolymers or copolymers of a polyol(allyl carbonate), used as optical elements.

The amount of the coating composition applied to at least one surface of the substrate, in one non-limiting embodiment, is an amount necessary so that a sufficient quantity of the photochromic polymer composition is incorporated, e.g., a photochromic amount, to produce a coating that exhibits a photochromic effect discernible to the naked eye when the cured coating is exposed to UV radiation. The thickness of the coating can vary widely. In another non-limiting embodiment, the cured coating can have a thickness of from 1 to 10,000 microns or from 5 to 1,000 microns or from 10 to 400 microns, e.g., 30 microns. The thickness of the applied coating can range between any combination of these values, inclusive of the recited values, e.g., from 1.1 to 9,999.9 microns.

In one embodiment, the photochromic articles of the present invention having a coating of varying thickness can be produced by single or multiple coating applications using spray coating, spin coating, spin and spray coating, spread coating, dip coating, casting or roll-coating. An alternate non-limiting method is the over molding process described hereinafter. The over-molding process can be used alone or in combination with another coating method known in the art.

In a further embodiment, a semifinished single vision (SFSV) lens having an adherent coating of the photochromic coating composition containing the photochromic polymer composition of the present invention can be prepared by an overmolding process. Typically, a predetermined volume of the photochromic coating composition is dispensed into a volume defined by a spherical concave or minus glass mold, which approximately matches the front surface curve and the outer diameter of a SFSV lens. The glass mold is fitted with a circular polyvinyl chloride gasket that extends approximately 0.2 millimeters above the mold and has an inside diameter approximately 4 millimeters less than outside diameter of the glass mold. After the composition is dispensed, the SFSV lens is carefully placed on the dispensed composition which spreads to fill the defined volume. A circular glass plate having an outside diameter equal to or greater than that of the lens is placed onto the rear surface of the lens. A spring clamp is positioned so that one side of the clamp is on the front surface of the negative mold and other side of the clamp is on the back surface of the glass plate. The resulting assembly is sealed by taping the circumference of the plate-lens-gasket-mold using polyurethane tape. The assembly is preheated in an air oven from 30 to 95°C for a 60 minute interval and subsequently the temperature is increased from 95 to 125°C and decreased to 82°C over a 3 hour interval. The assembly is separated by inserting a wedge beneath the gasket between the lens and mold. The lens now has an adherent coating of from 150 to 180 microns. In a further non-limiting embodiment, the overmolding process is used to produce coatings having a thickness of up to 10,000 micron.

Following application of the coating composition to the treated surface of the substrate, the coating is cured. Methods for curing the photochromic polymerizable coating composition include thermal, actinic radiation or a combination thereof. Additional non-limiting methods include irradiating the coating with infrared, gamma or electron radiation so as to initiate the polymerization reaction of the polymerizable components in the coating. This can be followed by a heating step.

If required and if appropriate the surface of the substrate to be coated can be cleaned prior to applying the coating composition for the purposes of promoting adhesion of the coating. Effective treatment techniques for plastics and glass are known to those skilled in the art.

In some embodiments, it may be necessary to apply a primer composition to the surface of the substrate before application of the coating composition containing the photochromic polymer composition of the present invention. The primer is at least partially interposed between the at least partially cured photochromic coating composition and the substrate. The phrase "at least partially interposed" means that the primer covers from a portion to the complete surface of the substrate and is applied to the substrate prior to' a subsequent coating.

The primer composition can serve as a barrier coating to prevent interaction of the coating ingredients with the substrate and vice versa, and/or as an adhesive layer to adhere the coating composition to the substrate. Application of the primer can be by any of the methods used in coating technology such as, for example, the aforedescribed methods for applying a coating.

The use of protective coatings, some of which can contain polymer-forming organosilanes, as primers to improve adhesion of subsequently applied coatings has been described in U.S. 6,150,430. In one non-limiting embodiment, non-tintable coatings are used. Examples of commercial coating products include SILVUE^{®} 124 and HI-GARD® coatings, available from SDC Coatings, Inc. and PPG Industries, Inc., respectively. In addition, depending on the intended use of the coated article it can be necessary to apply an appropriate protective coating(s), i.e., an abrasion resistant coating and/or coatings that serve as oxygen barriers, onto the exposed surface of the coating composition to prevent scratches from the effects of friction and abrasion and interactions of oxygen with the photochromic compounds, respectively. In some cases, the primer and protective coatings are interchangeable, e.g., the same coating can be used as the primer and the protective coating(s). Examples of hardcoats include those based on inorganic materials such as silica, titania and/or zirconia as well as organic hardcoats of the type that are ultraviolet light curable.

In one embodiment, the article of the present invention comprises, in combination, a substrate, a photochromic coating and a protective hardcoat. There are a variety of protective hardcoats known to those skilled in the art, for example those based on melamine, (meth)acrylates and solgels, e.g., organosilanes. In one embodiment, the protective hardcoat is an organosilane hardcoat. Another contemplated non-limiting embodiment, is the use of a combination of the photochromic coating composition containing the photochromic polymer composition of the present invention with optical elements to produce photochromic optical articles. Such articles can be prepared by sequentially applying to an at least partially cured polymeric host material, e.g., optical element, at least a partial coating of primer composition, at least a partial coating of an at least partially cured photochromic coating composition and at least a partial coating of an appropriate protective coating(s), if necessary.

In additional embodiments, other coatings or surface treatments, e.g., a tintable coating, antireflective surface, etc., can also be applied to the articles of the present invention e.g., photochromic coated substrates or photochromic imbibed hosts. An antireflective coating, e.g., a monolayer or multilayer of metal oxides, metal fluorides, or other such materials, can be deposited onto the photochromic articles, e.g., lenses, of the present invention through vacuum evaporation, sputtering, or some other method.

In one embodiment, the polymeric material that can be a host or substrate for the photochromic polymer composition of the present invention can be transparent, but it can also be translucent or even opaque. In another embodiment, the polymeric material is a solid transparent or optically clear material, e.g., materials suitable for optical applications, such as plano, ophthalmic and contact lenses, windows, automotive transparencies, e.g., windshields, aircraft transparencies, plastic sheeting, polymeric films, etc.

Examples of polymeric materials which can be used as a host for the imbibed photochromic polymer composition or as a substrate for a polymeric coating containing the photochromic polymer composition described herein include: poly(meth)acrylates, polyurethanes, polysilanes, polysiloxanes, polythiourethanes, thermoplastic polycarbonates, polyesters, poly(ethylene terephthalate), polystyrene, poly(alpha methylstyrene), copoly(styrene-methyl methacrylate), copoly(styrene-acrylonitrile), polyvinylbutyral, poly(vinyl acetate), cellulose acetate, cellulose propionate, cellulose butyrate, cellulose acetate butyrate, polystyrene or polymers, such as homopolymers and copolymers of monomers chosen from bis(allyl carbonate) monomers, styrene monomers, diisopropenyl benzene monomers, vinylbenzene monomers, e.g., those described in U.S. Patent 5,475,074, diallylidene pentaerythritol monomers, polyol (allyl carbonate) monomers, e.g., diethylene glycol bis(allyl carbonate), vinyl acetate monomers, acrylonitrile monomers, moo- or polyfunctional, e.g., di- or multi-functional, (meth)acrylate monomers such as (C₁-C₁₂)alkyl (meth)acrylates,
e.g., methyl (meth)acrylate, ethyl (meth)acrylate, butyl (meth)acrylate etc., poly(oxyalkylene)(meth)acrylate, poly(alkoxylated phenol (meth)acrylates), diethylene glycol (meth)acrylates, ethoxylated bisphenol A (meth)acrylates, ethylene glycol (meth)acrylates, poly(ethylene glycol) (meth)acrylates, ethoxylated phenol (meth)acrylates, alkoxylated polyhydric alcohol (meth)acrylates, e.g., ethoxylated trimethylol propane triacrylate monomers, urethane (meth)acrylate monomers, such as those described in U.S. Patent 5,373,033, or a mixture thereof. Further examples of polymeric organic host materials are disclosed in the U.S. Patent 5,753,146, column 8, line 62 to column 10, line 34, which disclosure is incorporated herein by reference.

In another embodiment, transparent copolymers and blends of transparent polymers are also suitable as polymeric materials. The substrate for the photochromic coating composition and/or the host for the photochromic polymer composition can be an optically clear polymerized material prepared from a thermoplastic polycarbonate resin, such as the carbonate-linked resin derived from bisphenol A and phosgene, which is sold under the trademark, LEXAN; a polyester, such as the material sold under the trademark, MYLAR; a poly(methyl methacrylate), such as the material sold under the trademark, PLEXIGLAS; polymerizates of a polyol(allyl carbonate) monomer, especially diethylene glycol bis(allyl carbonate), which monomer is sold under the trademark CR-39, and polymerizates of copolymers of a polyol (allyl carbonate), e.g., diethylene glycol bis(allyl carbonate), with other copolymerizable monomeric materials, and copolymers with a polyurethane having terminal diacrylate functionality, as described in U.S. Patents 4,360,653 and 4,994,208; and copolymers with aliphatic urethanes, the terminal portion of which contain allyl or acrylyl functional groups, as described in U.S. Patent 5,200,483.

One embodiment is the use of optically clear polymerizates as host material or as a substrate, e.g., materials suitable for optical applications, such as optical elements, e.g., plano and vision correcting ophthalmic lenses and contact lenses, windows, clear polymeric films, automotive transparencies, e.g., windshields, aircraft transparencies, plastic sheeting, etc. Such optically clear polymerizates may have a refractive index that may range from 1.48 to 2.00, e.g., from 1.495 to 1.75, or from 1.50 to 1.66. The refractive index can range between any combination of these values, inclusive of the recited ranges.

In another embodiment, contemplated as host materials or substrates are polymerizates of Spectralite® lenses sold by Sola International, TRIVE™ lenses and optical resins sold by PPG Industries, Inc. under the CR- designation, e.g., CR-307 and CR-407, and polymerizates prepared for use as hard or soft contact lenses. Methods for producing both types of contact lenses are disclosed in U.S. Patent 5,166,345, column 11, line 52, to column 12, line 52. Additional polymerizates contemplated for use with the photochromic compositions of the present invention are polymerizates used to form soft contact lenses with high moisture content described in U.S. Patent 5,965,630 and extended wear contact lenses described in U.S. Patent 5,965,631.

In a further embodiment of the present invention, the photochromic article comprises an at least partially cured polymeric host material comprising an at least partial coating of an at least partially cured photochromic coating composition on at least one surface of said at least partially cured organic polymeric host material, said photochromic coating composition comprising a photochromic amount of at least one photochromic polymer composition, said photochromic polymer composition comprising a reaction product of:
(a) at least one photochromic material having at least one polymerizable group; and
(b) at least one material copolymerizable with said photochromic material of (a); said material being adapted to form a polymer upon polymerization having a glass transition temperature less than 23°C;
said reaction product being adapted to provide a reduced Fade Half Life in the Photochromic Polymer Performance Test than photochromic material (a) free of polymerizable groups.

In the aforementioned photochromic article, another embodiment is that the reaction product is adapted to provide a greater ΔOD in the Photochromic Polymer Performance Test than photochromic material (a) free of polymerizable groups.

The present invention is more particularly described in the following examples which are intended as illustrative only, since numerous modifications and variations therein will be apparent to those skilled in the art.

Examples 1-4 utilize the same polymerizable photochromic material but include different copolymerizable materials. Comparative Examples A, E and F include a base photochromic material without the spacer and polymerizable group of the photochromic material used in Examples 1-4. Comparative Example B includes a base photochromic material with the same spacer group on the photochromic material of Examples 1-4 but has a methoxy group in place of the polymerizable group. Comparative Examples C and D include the same polymerizable photochromic material of Examples 1-4 but different copolymerizable materials are used. Example 5 describes the procedures used and test results of the Photochromic Polymer Performance Test.

### EXAMPLE 1

### STEP 1

Potassium t-butoxide (75 grams, 0.67 mole) was added to a reaction flask containing 200 milliliters (mL) of toluene. The reaction flask was equipped with an overhead stirrer, dropping funnel, and a condenser with nitrogen inlet. The contents of the reaction flask was heated to reflux temperature and a mixture of 4,4'-dimethylbenzophenone (105 grams, 0.5 mole), dimethyl succinate (90 grams, 0.62 mole), and toluene (200 grams) was added over a period of one-half hour. The resulting pasty mixture was refluxed an additional two hours, cooled, and about 400 mL of water was added and mixed vigorously. The aqueous layer was separated, acidified with dilute hydrochloric acid, and extracted with 200 mL of toluene. The solvents, toluene and residual t-butanol, were removed on the rotary evaporator to produce half-ester, 4,4-di(4-methylphenyl)-3-methoxycarbonyl-3-butenoic acids. This material was not purified further but was used directly in the next step.

### STEP 2

The half-ester from Step 1 was added to a reaction flask containing 200 mL of toluene. Acetic anhydride (100 grams) and anhydrous sodium acetate (15 grams) were added and the mixture was refluxed for 17 hours. The mixture was cooled and the solvent, toluene, was removed on a rotary evaporator. The resulting residue was dissolved in 200 mL of methylene chloride and stirred. Water (200 mL) was added followed by the slow addition of solid sodium carbonate until carbon dioxide evolution ceased. The methylene chloride layer was separated and washed with water. The solvent, methylene chloride, was removed on a rotary evaporator to yield about 100 grams of crystalline solid. The recovered product, 1-(4-methylphenyl)-2-methoxycarbonyl-4-acetoxy-6-methyl naphthalene, had a melting point of 144-146°C.

### STEP 3

The product from Step 2 (about 100 grams) was added to a reaction flask containing 350 mL of a 10 weight percent aqueous sodium hydroxide solution and 50 mL of methanol. The mixture was refluxed for one hour, cooled, then slowly poured into a beaker containing approximately one liter of cold (approx. 4°C) dilute hydrochloric acid. About 100 grams of the resulting crystalline product, 1-(4-methylphenyl)-4-hydroxy-6-methyl-2-naphthoic acid, having a melting point of 210-213°C., was collected by vacuum filtration.

### STEP 4

The product from Step 3 (about 100 grams) was added to a reaction flask containing xylene (250 grams) and 250 grams of a 85 weight percent phosphoric acid solution. The stirred mixture was refluxed in a one liter flask equipped with a Dean-Stark trap for 20 hours. During this time a solid product formed. The mixture was cooled and 200 mL of water was added. The solid was broken up with a spatula, filtered, and washed successively with water, 5 weight percent aqueous sodium bicarbonate, and water. Ninety grams of the product, 3,9-dimethyl-5-hydroxy-7H-benzo[C]-fluoren-7-one, were recovered by vacuum filtration.

### STEP 5

The product from Step 4 (10 grams) was added to a reaction flask containing 1,1-di(4-methoxyphenyl)-2-propyn-1-ol (10 grams) and 100 mL of toluene. The resulting mixture was stirred and heated to 50°C., three drops of dodecylbenzene sulfonic acid were added, and the reaction mixture was kept at 50°C. for five hours. After the reaction mixture cooled to room temperature, it was filtered and the collected filtrate was washed three times with 5 weight percent aqueous sodium hydroxide. The solvent, toluene, was removed on a rotary evaporator and the desired product crystallized on the addition of acetone to the residue. The solid was vacuum filtered, washed with fresh acetone, and dried to yield 16 grams of a product having a melting point of 227-229°C. An NMR showed the product to have a structure consistent with 3,3-di(4-methoxyphenyl)-6,11-dimethyl-13-oxo-indeno[2,1-f]naphtho[1,2-b]pyran.

### STEP 6

The product of Step 5 (10 grams) was added to a reaction flask containing 50 mL of anhydrous tetrahydrofuran. The mixture was cooled in an ice bath and protected from moisture with a nitrogen pad while an excess of methyl Grignard reagent was added to the reaction with stirring.
After stirring an additional ten minutes, 200 mL of 5 weight percent aqueous hydrochloric acid was added and the organic layer was separated and washed with water. The solvent, tetrahydrofuran, was removed on a rotary evaporator. The addition of approximately ten milliliters of a 2:1 mixture of hexane:ethyl acetate to the residue caused the crystallization of a non-photochromic material. This material was separated by filtration. The filtrate was column chromatographed on silica using a 3:1 mixture of hexane:ethyl acetate as elutant. The desired product, which crystallized from a methanol mixture, was filtered and dried to yield 8 grams of a product having a melting point of 233-235°C. An NMR spectrum showed the product to have a structure consistent with 3,3-di(4-methoxyphenyl)-6,11,13-trimethyl-13-hydroxy-indeno[2,1-f]naphtho[1,2-b]pyran.

### Step 7

The product from Step 6 (50.0 grams) was added to a reaction flask containing 500 mL diethylene glycol, 100 mL of toluene, and 2 mL of 37% hydrochloric acid. The reaction was heated to 80°C and maintained at that temperature for 2 hours with stirring. The reaction mixture was added to 500 mL of water and 300 mL of ethyl acetate was added. The organic layer was separated, washed with water, filtered, and the solvent, ethyl acetate, was removed on a rotary evaporator. The resulting residue was chromatographed on silica using dichloromethane followed by ethyl acetate as the eluants. The photochromic fractions were combined, the solvent was evaporated, and the desired product was induced to crystallize from a hexane/diethyl ether mixture. The recovered crystals were dried and filtered to yield 3 grams of product having a melting point range of 199-202°C. An NMR spectrum showed the product to have a structure consistent with 3,3-di(4-methoxyphenyl)-6,11,13-trimethyl-13-(2-(2-hydroxyethyl)ethoxy)-indeno[2,1-f]naphtho[1,2-b]pyran.

### Step 8

The product from step 7 (20 grams) was added to a reaction flask containing 300 ml of dichloromethane. The reaction was cooled to 5°C and 6 grams of methacryloyl chloride was added dropwise over 20 minutes. Six grams of triethylamine was then added dropwise over 60 minutes. After 60 minutes at 5°C, 200 ml of water was added to the reaction and the organic layer was separated and dried over magnesium sulfate. The solvent, dichloromethane, was removed on a rotary evaporator. The product was crystallized from a mixture of ethyl acetate and methanol. The crystals were filtered and dried to yield 18 grams of product. An NMR spectrum showed the product to have a structure consistent with 3,3-di(4-methoxyphenyl)-6,11,13-trimethyl-13-(2-(2-methacryloylethyl)ethoxy)-indeno[2,1-f]naphtho[1,2-b]pyran.

### Step 9

The following materials were added in the order and manner described to a suitable reaction vessel equipped with an agitator, reflux column, addition funnel, nitrogen inlet, probe connected to an external electronic controller and a heating mantle.

**Charge-1**

| Material | Weight (grams) |
|---|---|
| Toluene | 5 |

**Charge-2**

| Material | Weight (grams) |
|---|---|
| Product of Step 8 | 1.5 |
| Hexyl Acrylate (Reported Tg of -57°C) | 1.75 |
| CD-552⁽¹⁾ | 1.75 |
| AIBN⁽²⁾ | 0.15 |
| Toluene | 5.0 |

| | |
|---|---|
| (1) Methoxy Polyethylene Glycol (550) Monomethacrylate having a reported Tg of -65°C and is available from Sartomer. (2) 2,2'-Azobisisobutyronitrile available from Aldrich. | |

**Charge-3**

| Material | Weight (grams) |
|---|---|
| Toluene | 2.0 |
| AIBN⁽²⁾ | 0.05 |

Charge-1 was added to the reaction vessel; nitrogen was introduced into the vessel, and with stir bar running, heat was applied to the reaction vessel to maintain a temperature at which reflux of the solvent occurred. After reaching the reflux temperature, Charge-2 was added to the reaction vessel in a continuous manner over a period of 2, hours. The reaction was stirred at reflux for 30 minutes. Charge-3 was then added to the reaction mixture over 30 minutes and the reaction was held an additional 30 minutes at the reflux temperature. The solvent, toluene, was then evaporated until a mixture with approximately 50% solids was obtained. The contents of the reaction vessel were then cooled and transferred to a suitable container. The resulting polymer had a weight average molecular weight, as measured by gel permeation chromatography using polystyrene as a standard, of about 7,300.

### Example 2

The procedure for Step 9 of Example 1 was used except that Charge 2 was as follows:

**Charge-2**

| Material | Weight (grams) |
|---|---|
| Product of Step 8 of Example 1 | 1.5 |
| EEEA⁽³⁾ | 1.75 |
| CD-552⁽¹⁾ | 1.75 |
| AIBN⁽²⁾ | 0.15 |
| Toluene | 5.0 |

| | |
|---|---|
| (3) 2-(2-Ethoxyethoxy)ethyl acrylate having a reported Tg of -54°C and is available from Aldrich. | |

The resulting polymer had a weight average molecular weight, as measured by gel permeation chromatography using polystyrene as a standard, of about 6,800.

### Example 3

The procedure for Step 9 of Example 1 was used except that Charge 2 was as follows:

**Charge-2**

| Material | Weight (grams) |
|---|---|
| Product of Step 8 in Example 1 | 1.5 |
| EEEA⁽³⁾ | 1.75 |
| AIBN⁽²⁾ | 0.15 |
| Toluene | 5.0 |

The resulting polymer had a weight average molecular weight, as measured by gel permeation chromatography using polystyrene as a standard, of about 8,900.

### Example 4

The procedure for Step 9 of Example 1 was used except that Charge 2 was as follows:

**Charge-2**

| Material | Weight (grams) |
|---|---|
| Product of Step 8 of Example 1 | 1.0 |
| Hexyl Acrylate | 2.0 |
| CD-552⁽¹⁾ | 1.5 |
| CD-572⁽⁴⁾ | 0.5 |
| AIBN⁽²⁾ | 0.15 |
| Toluene | 5.0 |

| | |
|---|---|
| (4) Ethoxylated (10) hydroxyethyl methacrylate for which a Tg was unavailable from Sartomer. | |

The resulting polymer had a weight average molecular weight, as measured by gel permeation chromatography using polystyrene as a standard, of about 8,200.

### Comparative Example A

The following materials were added to a container equipped with an agitator and were mixed for 2 minutes.

| Material | Weight (grams) |
|---|---|
| Product of Step 6 of Example 1 | 0.15 |
| NMP⁽⁵⁾ | 0.70 |

| | |
|---|---|
| (5) N-methyl pyrrolidone solvent of 99 percent purity. | |

### Comparative Example B

### Part A

The product from Step 6 of Example 1 (20.0 grams) was added to a reaction flask containing 200 mL diethylene glycol monomethyl ether, 100 mL of toluene, and 200 mg of para Toluene sulfonic acid. The reaction was heated to 80°C and maintained at that temperature for 2 hours with stirring. The reaction mixture was added to 500 mL of water and 300 mL of ethyl acetate was added. The organic layer was separated, washed with water, filtered, and the solvent, ethyl acetate, was removed on a rotary evaporator. The resulting residue was chromatographed on silica using dichloromethane followed by ethyl acetate as the eluants. The photochromic fractions were combined, the solvent was evaporated, and the desired product was induced to crystallize from a hexane/diethyl ether mixture. The recovered crystals were dried and filtered to yield 3 grams of product having a melting point range of 130-132°C. An NMR spectrum showed the product to have a structure consistent with 3,3-di(4-methoxyphenyl)-6,11,13-trimethyl-13-(2-(2-methoxyethyl)ethoxy)-indeno[2,1-f]naphtho[1,2-b]pyran.

### Part B

A photochromic polyurethane coating was prepared by adding the following materials in the order and manner described to a container equipped with an agitator.

| Material | Weight (grams) |
|---|---|
| Composition D⁽⁶⁾ | 1.01 |
| PC-1122⁽⁷⁾ | 1.26 |
| Vestenat ® B 1358⁽⁸⁾ | 2.67 |
| Tin Catalyst⁽⁹⁾ | 0.04 |
| NMP⁽⁵⁾ | 1.97 |
| TINUVIN ® 144⁽¹⁰⁾ | 0.08 |
| SILQUEST ® A-187⁽¹¹⁾ | 0.15 |
| Product of Part A | 0.33 |

| | |
|---|---|
| (6) Polymeric polyol having a weight average molecular weight, as measured by gel permeation chromatography using polystyrene as a standard, of about 9000 and a hydroxyl value of about 170, based on polymer solids prepared by the procedure disclosed in U.S. Patent 6,187,444 B1, column 18, line 53 to column 19, line 45. (7) An aliphatic polycarbonate diol, reported to be polyhexamethylene dicarbonate, available from Stahl USA. (8) A methyl ethyl ketoxime blocked, aliphatic polyisocyanate available from Huls America, Inc. (9) Dibutyltin dilaurate available as DABCO T-12 catalyst or METACURE T-12 catalyst. (10) A hindered amine ultraviolet light stabilizer available from Ciba-Geigy Corp. (11) A γ-glycidoxypropyl trimethoxysilane available from OSi Specialties. | |

After the addition of materials was completed, the solution was mixed while heating until a homogeneous clear solution was obtained.

### Comparative Example C

The procedure for Step 9 of Example 1 was used except that Charge 2 was as follows:

**Charge-2**

| Material | Weight (grams) |
|---|---|
| Product of Step 8 of Example 1 | 1.5 |
| Methyl Methacrylate (Reported Tg of 115°C.) | 3.5 |
| AIBN⁽²⁾ | 0.15 |
| Toluene | 5.0 |

The resulting oligomer had a weight average molecular weight, as measured by gel permeation chromatography using polystyrene as a standard of about 6,300.

### Comparative Example D

The procedure for Step 9 of Example 1 was used except that Charge 2 was as follows:

**Charge-2**

| Material | Weight (grams) |
|---|---|
| Product of Step 8 of Example 1 | 1.5 |
| Styrene | 3.5 |
| AIBN⁽²⁾ | 0.15 |
| Toluene | 5.0 |

The resulting polymer had a weight average molecular weight, as measured by gel permeation chromatography using polystyrene as a standard of about 9,000.

### Comparative Example E

A photochromic polyurethane coating was prepared by adding the following materials in the order and manner described to a container equipped with an agitator.

**Charge-1**

| Material | Weight (grams) |
|---|---|
| Product of Step 6 in Example 1 | 0.3 |
| NMP⁽⁵⁾ | 3.0 |

**Charge-2**

| Material | Weight (grams) |
|---|---|
| Vestenat B 1358⁽⁸⁾ | 4.7 |
| Composition D⁽⁶⁾ | 1.8 |
| PC-1122⁽⁷⁾ | 2.2 |
| Tin Catalyst⁽⁹⁾ | 0.06 |
| Baysilone PL⁽¹²⁾ | 0.03 |

| | |
|---|---|
| (12) Phenyl methyl polysiloxane available from Bayer Corporation. | |

Charge 1 was mixed while heating until the solution became clear. Charge 2 was added and the resulting mixture was agitated until a homogeneous solution was obtained.

### Comparative Example F

In place of 1 gram of Example 4, 0.30 gram of the product of Step 6 of Example 1 was used to produce the thermoplastic polycarbonate sheet described hereinafter in Part E of Example 5.

### Example 5

The polyurethane coating composition used for the Photochromic Polymer Performance Test can be: of the type used for Comparative Example B, where the photochromic material was included at a level of 4.4 percent by weight, based on the total weight of the composition; of the type used for Comparative Example E, where the photochromic material was included at a level of 2.5 percent by weight, based on the total weight of the composition; of the type used in the following Part A, where the photochromic material was included at a level of 25 percent by weight, based on the total weight of the composition; or of any type of polyurethane coating composition as long as the same type of coating composition is used for both the Examples and Comparative examples.

The polyurethane coating composition described as follows in Part A was formulated with the Examples and Comparative Examples in Part B; applied to lenses in Part C; tested from microhardness in Part D; tested for comparable levels of the photochromic polymer and base photochromic material by ultraviolet light absorbance testing at 390 nanometers in Part F; and tested for photochromic performance properties in Part G. Example 4 and Comparative Examples B, E and F were tested in either a polyurethane coating composition different than that of Part A below or in a thermoplastic polycarbonate. All Examples and Comparative Examples were tested in duplicate. The results reported herein are the arithmetic average of the test results.

### Part A

A polyurethane coating solution was prepared following the procedure of Comparative Example E except that the following materials in the amounts listed were used.

| Material | Weight (grams) |
|---|---|
| Composition D⁹⁶⁾ | 43.2 |
| Vestanat B 1358⁽⁸⁾ | 23.8 |
| NMP⁽⁵⁾ | 11.3 |
| Tinuvin 144⁽¹⁰⁾ | 0.7 |
| Tin Catalyst⁽⁹⁾ | 0.6 |
| Silquest A-187⁽¹¹⁾ | 2.3 |
| Baysilone PL⁽¹²⁾ | 0.2 |

### Part B

A photochromic polyurethane coating solution was prepared by adding 1 gram of each of Examples 1, 2, 3 and Comparative Examples C and D individually to 4 gram aliquots of the polyurethane solution of Part A and mixing each until a clear solution resulted..For Comparative Example A, 0.85 grams of the example was used.

The photochromic polyurethane solutions of Comparative Example B and Example 1A were also used. The procedure of Comparative Example B was followed except that 0.65 gram of Example 1 was used to produce the coating designated hereinafter as Example 1A.

### Part C

The solutions prepared in Part B were applied via a spincoating method to lenses made of CR-39® monomer. The lenses were 76 millimeters in diameter and were obtained from SOLA Optical USA. Prior to application of the coating, each lens was immersed for 3 minutes in an aqueous potassium hydroxide solution having a normality of about 2.4 that was maintained at a temperature of 55°C. and then rinsed with deionized water. The immersion and rinsing steps were conducted in a Branson Ultrasonic Model 5200 sonicator. Approximately 800 milligrams of solution was dispensed onto each lens that was spinning at. 2000 rpm, which resulted in a wet film weight of approximately 200 milligrams per lens. The coated lenses were cured for 75 minutes in a convection oven maintained at 140°C.

### Part D

The photochromic coated lenses prepared in Part C were subjected to microhardness testing using a Fischerscope HCV, Model H-100 available from Fischer Technology, Inc. The microhardness, measured in Newtons per mm², of the coated lenses of the Examples and Comparative Examples was determined under the conditions of a 100 milliNewton load, 30 load steps and 0.5 second pauses between load steps. The results reported in Table 1 were measured at an indentor depth of 2pm.

The results show that the lenses having the polyurethane coating containing the Comparative Examples A, C and D were harder than the coatings of Examples 1, 2 and 3. The lens having the polyurethane coating of Comparative Example E was formulated to be softer to demonstrate the photochromic performance properties of the base photochromic material in a coating that is softer than the other Comparatives and Examples. The results for the coating of Example 1A show that it is also softer than its respective Comparative Example CE-B.

**Table 1**

| Example Number | Microhardness Newtons per mm² |
|---|---|
| 1 | 126 |
| 1A | 86 |
| 2 | 125 |
| 3 | 123 |
| CE-A | 176 |
| CE-B | 106 |
| CE-C | 176 |
| CE-D | 174 |
| CE-E | 90 |

### Part E

The Plasti-Corder mixer (made by C.W. Brabender Instruments, Inc.) was heated to 150°C and the press was heated to 325°F for approximately ½ hour prior to starting. The resin and 1 percent by weight, based on the total weight, of stabilizer (Irganox 1010 as stabilizer from Ciba Geigy) were added into a separate weighing dish and hand mixed with a spatula. The Plasti-Corder mixer was used to compound the photochromic materials into the thermoplastic resins. Fifty grams of polycarbonate beads were added to the bowl and mixed at 98rpm for 2 minutes until thoroughly melted. One gram of Example 4 was then added to the molten resin and mixed in the Plasti-Corder for an additional 2 minutes at 98rpm. If a' shorter mixing time was used it resulted in nonhomogeneous mixing of the photochromic materials.

The molten resin with photochromic oligomer was removed from the bowl and placed between two Teflon® sheets. The Teflon® sheets were inserted into the press, allowed to heat for 1 minute and pressed to 5 tons for 1 minute. This resulted in a flat non-uniform sheet. After the sheet cooled, a small square was cut from the sheet (∼3-5g). The square was placed between two 6"x 6" glass sheet treated with Nanofilm. The glass sheets were placed in the press, heated for 1 minute, pressed to 10 tons for 1 minute. This resulted in a smooth sheet, which was used for microhardness and photochromic testing.

Comparative Example F was prepared using 0.30 grams of the product of Step 6 of Example 1 in place of the photochromic polymer from Example 4. The Fischer microhardness results are listed below in Table 2. The results show that Example 4 and Comparative Example F have a comparable hardness. The photochromic performance results are listed in Table 4.

**Table 2**

| Example Number | Microhardness Newtons per mm² |
|---|---|
| 4 | 114 |
| CE-F | 117 |

### PART F

The photochromic coated lenses prepared herein and polymeric sheets from Part E (that were cut to fit the sample holder) were screened for ultraviolet absorbance at 390 nanometers using an ultraviolet spectrophotometer. The results are listed in Table 3. The results reveal that the amount of photochromic material in CE-C was comparable to the amount in Examples 1-4 and the amount of photochromic material in the other Comparative Examples was typically higher than the Examples of the invention.

**Table 3**

| Example Number | Ultraviolet Absorbance at 390 nm |
|---|---|
| 1 | 1.29 |
| 1A | 0.75 |
| 2 | 1.47 |
| 3 | 1.23 |
| 4 | 1.17 |
| CE-A | 1.73 |
| CE-B | 1.91 |
| CE-C | 1.41 |
| CE-D | HAZY |
| CE-E | 1.11 |
| CE-F | 2.84 |

### PART G

The photochromic test samples prepared in Part F were tested for photochromic response on an optical bench.
The optical bench was maintained at a temperature of 72°F (22°C). Prior to testing on the optical bench, the photochromic coated lenses were exposed to 365 nm ultraviolet light for about 10 minutes at a distance of about 14 cm from the lamps to activate the photochromic material. The UVA (315 to 380 nm) irradiance at the sample was measured with a Licor Model Li-1800 spectroradiometer and found to be 22.2 Watts per square meter. The samples were then placed under a halogen lamp for about 10 minutes at a distance of about 36 cm from the lamp to bleach, or inactivate, the photochromic materials in the samples. The illuminance at the sample was measured with the Licor spectroradiometer and found to be 21.9 Klux. The test lenses were then kept in a dark environment at room temperature (from 70 to 75°F or 21 to 24°C) for at least 1 hour prior to testing on the optical bench.

The bench was fitted with an Oriel Model #66011 300 Watt Xenon arc lamp, a remote controlled shutter, a Schott, 3mm KG-2 band-pass filter, which removed short wavelength radiation, neutral density filter(s), condensing lens for beam collimation, a quartz water cell for maintaining sample temperature, and a sample holder in which the test sample to be tested was inserted into the water cell.

Measurements were made on the optical bench with the power output adjusted to 6.2 Watts per square meter UVA and 18 Klux. Verification of the power output was made using an International Light Research Radiometer (Model #: IL1700; Serial #: 1290) with a radiometer detector (Model #: SED 033; Serial #: 5886) or comparable equipment. The radiometer detector was placed in an optical rail carrier on the rail at the correct sample position which is at the cross point of the activating and monitoring beams and the light output was measured. Adjustments to the power output were made by increasing or decreasing the lamp wattage or by adding or removing neutral density filters in the light path.

The test lenses were exposed to UV irradiation using a Xenon arc lamp at 30° normal to the surface of the test lens.
A monitoring collimated beam of light from a tungsten/halogen lamp perpendicular to the test sample was passed through the sample and then directly into an integrating sphere connected by a fiber optic cable to an Ocean Optics S2000 spectrophotometer. The control of the test conditions and acquisition of the data was handled by an in house visual basic program in conjunction with Ocean Optics 001 Base 32 software.

Response measurements, in terms of a change in optical density (ΔOD) from the unactivated or bleached state to the activated or darkened state were determined by establishing the initial unactivated transmittance, opening the shutter from the Xenon lamp(s) and measuring the transmittance through activation at selected intervals of time. Change in optical density is determined according to the formula: ΔOD = log(%Tb/%Ta), where %Tb is the percent transmittance in the bleached state, %Ta is the percent transmittance in the activated state and the logarithm is to the base 10.

The ΔOD was measured after fifteen (15) minutes of UV exposure with the optical bench maintained at a temperature of 72°F (22°C). The Fade Half Life (T 1/2) is the time interval in seconds for the ΔOD of the activated form of the photochromic material in the coated test samples to reach one half the fifteen minute ΔOD at 72°F, 22°C, after removal of the source of activating light. The results for the photochromic test samples are listed in Table 4.

**Table 4**

| Example Number | 72°F ΔOD @ 15 (minutes) | 72°F (T 1/2) (seconds) |
|---|---|---|
| 1 | 0.72 | 48 |
| 1A | 0.41 | 55 |
| 2 | 0.72 | 49 |
| 3 | 0.72 | 46 |
| 4 | 0.41 | 117 |
| CE-A | 0.29 | >>600 |
| CE-B | 0.78 | 112 |
| CE-C | 0.21 | >>600 |
| CE-D | LENS IS HAZY | LENS IS HAZY |
| CE-E | 0.68 | 102 |
| CE-F | 0.23 | >1100 |

The results for Examples 1, 2 and 3, when compared to the results for Comparative Example A, having the photochromic material without the spacer group and polymerizable group and for Comparative Example C, having the same photochromic material mixed with monomer prior to incorporation into the polyurethane coating, attained darker levels and bleached faster in the Photochromic Polymer Performance Test. The same results were observed in the comparison of Example 4 and Comparative Example F.

The results for Example 1A as compared to Comparative Example B, which has a photochromic material with the same spacer group as the photochromic material of Example 1A but without a polymerizable group, demonstrated an improved or reduced Fade Half Life and the ΔOD was reduced. The results for Comparative Example D could not be determined because of the haziness of the coated lens. The results for Comparative Example E, having the softer polyurethane coating, demonstrated a somewhat lower ΔOD and had a slower Fade Half Life than Examples 1, 2 and 3.

## Claims

1. A photochromic polymer composition comprising a reaction product of:
(a) at least one photochromic material having at least one polymerizable group; and
(b) at least one material copolymerizable with said photochromic material of (a); said material being adapted to form a polymer upon polymerization having a glass transition temperature less than 23°C.

2. The photochromic polymer composition of claim 1 wherein the reaction product has a weight average molecular weight of from 1,000 to 1,000,000, preferably 1,500 to 100,000, most preferred 3,000 to 10,000 as determined by Gel Permeation Chromatography using polystyrene as a standard.

3. The photochromic polymer composition of claim 1 wherein photochromic material (a) further comprises at least one other group in addition to the polymerizable group chosen from hydroxyl, carboxyl, amino, mercapto, anhydride, epoxy, isocyanato, acryloxy, methacryloxy, vinyl or a combination thereof.

4. The photochromic polymer composition of claim 1 wherein the reaction product further comprises at least one residual polymerizable group.

5. The photochromic polymer composition of claim 4 wherein the residual polymerizable group is chosen from hydroxyl, carboxyl, amino, mercapto, anhydride, epoxy, isocyanato, acryloxy, methacryloxy, vinyl or a combination thereof.

6. The photochromic polymer composition of any of the preceding claims wherein the photochromic material (a) comprises a photochromic compound having at least one activated absorption maxima within the range of between 400 and 700 nanometers.

7. The photochromic polymer composition of claim 6 wherein the photochromic compound is chosen from chromenes, spiropyrans, oxazines, organo-metal dithiozonates, fulgides, fulgimides or a mixture thereof.

8. The photochromic polymer composition of any of the preceding claims wherein the photochromic material (a) further comprises at least one non-polymerizable divalent linking group connecting the photochromic base material and the polymerizable group.

9. The photochromic polymer composition of claim 8 wherein the non-polymerizable divalent linking group is chosen from linear or branched chain C₁-C₂₀ alkylene, linear or branched chain C₁-C₄ polyoxyalkylene, cyclic C₃-C₂₀ alkylene, phenylene, naphthylene, C₁-C₄ alkyl substituted phenylene, mono- or poly-urethane(C₁-C₂₀)alkylene, mono- or poly-ester(C₁-C₂₀)alkylene, mono- or poly- carbonate(C₁-C₂₀)alkylene or a combination thereof.

10. The photochromic polymer composition of any of the preceding claims wherein copolymerizable material (b) is adapted to form a polymer upon polymerization having a glass transition temperature less than 0°C.

11. The photochromic polymer composition of any of the preceding claims wherein copolymerizable material (b) is polymerizable by thermal radiation, actinic radiation or a combination thereof.

12. The photochromic polymer composition of any of the preceding claims wherein copolymerizable material (b) comprises:
(a) an ethylenically unsaturated monomer:
(b) an ethylenically unsaturated monomer comprising at least one additional reactive group chosen from hydroxyl, carboxyl, amino, mercapto, vinyl, acryloxy, methacryloxy, anhydride, epoxy or isocyanato; or
(c) a combination thereof.

13. A photochromic article comprising an at least partially cured polymerizable photochromic polymer according to any of claims 1-12.

14. The photochromic article of claim 13 wherein the article comprises, an at least partially cured polymerizate of the photochromic polymer composition and a material co-polymerizable with said polymerizable photochromic polymer composition.

15. The photochromic article of claim 13 wherein the at least partially cured polymerizable photochromic polymer composition is in the form of particles.

16. The photochromic article of claim 15 wherein the particles have an average size of from 0.01 µm to 100 µm.

17. The photochromic article of claim 15 wherein the particles are at least partially coated.

18. The photochromic article of claim 17 wherein the particles are at least partially coated with a protective coating.

19. The photochromic article of claim 18 wherein the protective coating is a solgel coating.

20. A photochromic article comprising an at least partially cured polymeric host material and a photochromic amount of at least one photochromic polymer composition according to any of claims 1 - 12.

21. A photochromic article comprising a substrate comprising an at least partial coating of an at least partially cured photochromic coating composition according to any of claims 1-12 on at least one surface of said substrate.

22. The photochromic article of claim 21 wherein the substrate comprises paper, glass, ceramic, wood, masonry, textile, metal or polymeric material, whereby the polymeric material is preferably a polymeric host material.

23. The photochromic article of any of claims 20 and 22 wherein the polymeric host material is a polymer chosen from thermosetting or thermoplastic polymeric materials.

24. The photochromic article of claim 21 wherein the polymeric host material is a polymer chosen from poly(urea-urethane), poly(C₁-C₁₂ alkyl methacrylates), poly(oxyalkylene) dimethacrylates, poly(alkoxylated phenol methacrylates), cellulose acetate, cellulose triacetate, cellulose acetate propionate, cellulose acetate butyrate, poly(vinyl acetate), poly(vinyl alcohol), poly(vinyl chloride), poly(vinylidene chloride), thermoplastic polycarbonates, polyesters, polyurethanes, polysilanes, polysiloxanes, polythiourethanes, poly(ethylene terephthalate), polystyrene, poly(alpha methylstyrene), copoly(styrene-methylmethacrylate), copoly(styrene-acrylonitrile), polyvinylbutyral and polymers of polyol(allyl carbonate) monomers, polyfunctional acrylate monomers, polyfunctional methacrylate monomers, diethylene glycol dimethacrylate monomers, diisopropenyl benzene monomers, ethoxylated bisphenol A dimethacrylate monomers, ethylene glycol bismethacrylate monomers, poly(ethylene glycol) bismethacrylate monomers, ethoxylated phenol methacrylate monomers, alkoxylated polyhydric alcohol acrylate monomers, diallylidene pentaerythritol monomers, urethane acrylate monomers, vinylbenzene monomers, styrene monomers or a mixtures thereof.

25. The photochromic article of claim 21 wherein the at least partially cured photochromic coating composition comprises a film-forming polymer composition.

26. The photochromic article of claim 25 wherein the film-forming polymer composition comprises thermoplastic or thermosetting film-forming polymer.

27. The photochromic article of claim 26 wherein the film-forming polymer is a thermosetting polymer and is chosen from polyurethanes, aminoplast resins, poly(meth)acrylates, polyanhydrides, polyacrylamides, epoxy resins or polysilanes.

28. The photochromic article of claim 21 further comprising an at least partial coating of a primer composition interposed between the at least partially cured photochromic coating composition and the substrate.

29. The photochromic article of claim 28 further comprising an at least partial coating of a protective coating at least partially applied to the surface of the at least partially cured photochromic coating composition.

30. The photochromic article of any of claims 21-29 wherein the photochromic article is an optical element.

31. The photochromic article of claim 30 wherein the optical element is an ophthalmic lens or a contact lens.

## Patentansprüche

1. Photochrome Polymerzusammensetzung, enthaltend ein Reaktionsprodukt aus:
(a) wenigstens einem photochromen Material mit wenigstens einer polymerisierbaren Gruppe und
(b) wenigstens einem Material, das mit diesem photochromen Material aus (a) copolymerisierbar ist, wobei dieses Material angepasst ist, um nach Polymerisation ein Polymer mit einer Glasübergangstemperatur von weniger als 23°C zu bilden.

2. Photochrome Polymerzusammensetzung nach Anspruch 1, worin das Reaktionsprodukt ein gewichtsmittleres Molekulargewicht von 1.000 bis 1.000.000, vorzugsweise 1.500 bis 100.000, am meisten bevorzugt 3.000 bis 10.000, bestimmt durch Gelpermeationschromatographie unter Verwendung eines Polystyrolstandards, aufweist.

3. Photochrome Polymerzusammensetzung nach Anspruch 1, worin das photochrome Material (a) weiterhin wenigstens eine andere Gruppe zusätzlich zu der polymerisierbaren Gruppe, ausgewählt aus Hydroxyl, Carboxyl, Amino, Mercapto, Anhydrid, Epoxy, Isocyanato, Acryloxy, Methacryloxy, Vinyl oder einer Kombination davon, enthält.

4. Photochrome Polymerzusammensetzung nach Anspruch 1, worin das Reaktionsprodukt weiterhin wenigstens eine verbleibende polymerisierbare Gruppe enthält.

5. Photochrome Polymerzusammensetzung nach Anspruch 4, worin die verbleibende polymerisierbare Gruppe ausgewählt ist aus Hydroxyl, Carboxyl, Amino, Mercapto, Anhydrid, Epoxy, Isocyanato, Acryloxy, Methacryloxy, Vinyl oder einer Kombination davon.

6. Photochrome Polymerzusammensetzung nach einem der vorstehenden Ansprüche, worin das photochrome Material (a) eine photochrome Verbindung mit wenigstens einem aktivierten Absorptionsmaximum im Bereich zwischen 400 und 700 nm enthält.

7. Photochrome Polymerzusammensetzung nach Anspruch 6, worin die photochrome Verbindung ausgewählt ist aus Chromenen, Spiropyranen, Oxazinen, organometallischen Dithiozonaten, Fulgiden, Fulgimiden oder einer Mischung davon.

8. Photochrome Polymerzusammensetzung nach einem der vorstehenden Ansprüche, worin das photochrome Material (a) weiterhin wenigstens eine nichtpolymerisierbare divalente Verbindungsgruppe enthält, die das photochrome Basismaterial und die polymerisierbare Gruppe verbindet.

9. Photochrome Polymerzusammensetzung nach Anspruch 8, worin die nichtpolymerisierbare divalente Verbindungsgruppe ausgewählt ist aus linearen oder verzweigten C₁- bis C₂₀-Alkylenen, linearen oder verzweigten C₁- bis C₄-Polyoxyalkylenen, cyclischem C₃- bis C₂₀-Alkylen, Phenylen, Naphthylen, C₁- bis C₄-alkylsubstituiertem Phenylen, Mono- oder Polyurethan(C₁- bis C₂₀)alkylen, Mono- oder Polyester(C₁- bis C₂₀)alkylen, Mono- oder Polycarbonat(C₁- bis C₂₀)alkylen oder einer Kombination davon.

10. Photochrome Polymerzusammensetzung nach einem der vorstehenden Ansprüche, worin das copolymerisierbare Material (b) angepasst ist, um nach Polymerisation ein Polymer mit einer Glasübergangstemperatur von weniger als 0°C zu bilden.

11. Photochrome Polymerzusammensetzung nach einem der vorstehenden Ansprüche, worin das copolymerisierbare Material (b) durch thermische Strahlung, actinische Strahlung oder eine Kombination davon polymerisierbar ist.

12. Photochrome Polymerzusammensetzung nach einem der vorstehenden Ansprüche, worin das copolymerisierbare Material (b) enthält:
(a) ein ethylenisch ungesättigtes Monomer,
(b) ein ethylenisch ungesättigtes Monomer, das wenigstens eine zusätzliche reaktive Gruppe, ausgewählt aus Hydroxyl, Carboxyl, Amino, Mercapto, Vinyl, Acryloxy, Methacryloxy, Anhydrid, Epoxy oder Isocyanato, enthält oder
(c) eine Kombination davon.

13. Photochromer Gegenstand, enthaltend ein wenigstens teilweise gehärtetes polymerisierbares photochromes Polymer nach einem der Ansprüche 1-12.

14. Photochromer Gegenstand nach Anspruch 13, wobei der Gegenstand ein wenigstens teilweise gehärtetes Polymerisat der photochromen Polymerzusammensetzung und ein Material, das mit der polymerisierbaren photochromen Polymerzusammensetzung copolymerisierbar ist, enthält.

15. Photochromer Gegenstand nach Anspruch 13, wobei die wenigstens teilweise gehärtete polymerisierbare photochrome Polymerzusammensetzung in Form von Teilchen vorliegt.

16. Photochromer Gegenstand nach Anspruch 15, wobei die Teilchen eine mittlere Größe von 0,01 µm bis 100 µm aufweisen.

17. Photochromer Gegenstand nach Anspruch 15, wobei die Teilchen wenigstens teilweise beschichtet sind.

18. Photochromer Gegenstand nach Anspruch 17, wobei die Teilchen wenigstens teilweise mit einer Schutzbeschichtung beschichtet sind.

19. Photochromer Gegenstand nach Anspruch 18, wobei die Schutzbeschichtung eine Solgelbeschichtung ist.

20. Photochromer Gegenstand, enthaltend ein wenigstens teilweise gehärtetes polymeres Wirtsmaterial und eine photochrome Menge wenigstens einer photochromen Polymerzusammensetzung nach einem der Ansprüche 1-12.

21. Photochromer Gegenstand, enthaltend ein Substrat, das eine wenigstens partielle Beschichtung aus einer wenigstens teilweise gehärteten photochromen Beschichtungszusammensetzung nach einem der Ansprüche 1-12 auf wenigstens einer Oberfläche dieses Substrats enthält.

22. Photochromer Gegenstand nach Anspruch 21, wobei das Substrat Papier, Glas, Keramik, Holz, Mauerwerk, Textil, Metall oder polymere Materialien umfasst, wobei das polymere Material vorzugsweise ein polymeres Wirtsmaterial ist.

23. Photochromer Gegenstand nach einem der Ansprüche 20 und 22, worin das polymere Wirtsmaterial ein Polymer ist, das ausgewählt ist aus duroplastichen oder thermoplastischen polymeren Materialien.

24. Photochromer Gegenstand nach Anspruch 21, wobei das polymere Wirtsmaterial ein Polymer ist, das ausgewählt ist aus Poly(ureaurethan), Poly(C₁- bis C₁₂-alkylmethacrylaten), Poly(oxyalkylen)dimethacrylaten, poly(alkoxylierten Phenolmethacrylaten), Celluloseacetat, Cellulosetriacetat, Celluloseacetatpropionat, Celluloseacetatbutyrat, Poly(vinylacetat), Poly(vinylalkohol), Poly(vinylchlorid), Poly(vinylidenchlorid), thermoplastischen Polycarbonaten, Polyestern, Polyurethanen, Polysilanen, Polysiloxanen, Polythiourethanen, Poly(ethylenterephthalat), Polystyrol, Poly(α-methylstyrol), Copoly(styrol-methylmethacrylat), Copoly(styrol-acrylnitril), Polyvinylbutyral und Polymeren von Polyol(allylcarbonat)monomeren, polyfunktionellen Acrylatmonomeren, polyfunktionellen Methacrylatmonomeren, Diethylenglykoldimethacrylatmonomeren, Diisopropenylbenzoimonomeren, ethoxylierten Bisphenol-A-dimethacrylatmonomeren, Ethylenglykolbismethacrylatmonomeren, Poly(ethylenglykol)bismethacrylatmonomeren, ethoxylierten Phenolmethacrylatmonomeren, alkoxylierten mehrwertigen Alkoholacrylatmonomeren, Diallylidenpentaerythritmonomeren, Urethanacrylatmonomeren, Vinylbenzolmonomeren, Styrolmonomeren oder einer Mischung davon.

25. Photochromer Gegenstand nach Anspruch 21, wobei die wenigstens teilweise gehärtete photochrome Beschichtungszusammensetzung eine filmbildende Polymerzusammensetzung umfasst.

26. Photochromer Gegenstand nach Anspruch 25, wobei die filmbildende Polymerzusammensetzung ein thermoplastisches oder wärmehärtendes filmbildendes Polymer enthält.

27. Photochromer Gegenstand nach Anspruch 26, wobei das filmbildende Polymer ein wärmehärtendes Polymer ist und ausgewählt ist aus Polyurethanen, Aminoplastharzen, Poly(meth)acrylaten, Polyanhydriden, Polyacrylamiden, Epoxyharzen oder Polysilanen.

28. Photochromer Gegenstand nach Anspruch 21, der weiterhin eine wenigstens partielle Beschichtung aus einer Grundierungsbeschichtung enthält, die zwischen der wenigstens teilweise gehärteten photochromen Beschichtungszusammensetzung und dem Substrat angeordnet ist.

29. Photochromer Gegenstand nach Anspruch 28, der weiterhin eine wenigstens partielle Beschichtung aus einer Schutzbeschichtung, die wenigstens teilweise auf der Oberfläche der wenigstens teilweise gehärteten photochromen Beschichtungszusammensetzung aufgebracht ist, enthält.

30. Photochromer Gegenstand nach einem der Ansprüche 21-29, wobei der photochrome Gegenstand ein optisches Element ist.

31. Photochromer Gegenstand nach Anspruch 30, wobei das optische Element ein Augenglas oder eine Kontaktlinse ist.

## Revendications

1. Composition de polymères photochromiques comprenant un produit réactionnel obtenu à partir :
(a) d'au moins une substance photochromique contenant au moins un groupe polymérisable ; et
(b) d'au moins une substance copolymérisable avec ladite substance photochromique de (a) ; ladite substance étant adaptée pour former un polymère par polymérisation possédant une température de transition vitreuse inférieure à 23 °C.

2. Composition de polymères photochromiques selon la revendication 1, dans laquelle le produit réactionnel possède un poids moléculaire moyen en poids de 1 000 à 1 000 000, de préférence de 1 500 à 100 000, et de manière préférée entre toutes de 3 000 à 10 000, tel que déterminé par chromatographie par perméation sur gel en utilisant un polystyrène comme étalon.

3. Composition de polymères photochromiques selon la revendication 1, dans laquelle la substance photochromique (a) comprend en outre au moins un autre groupe en plus du groupe polymérisable choisi parmi un hydroxyle, un carboxyle, un amino, un mercapto, un anhydride, un époxy, un isocyanato, un acryloxy, un méthacryloxy, un vinyle ou l'une de leurs combinaisons.

4. Composition de polymères photochromiques selon la revendication 1, dans laquelle le produit réactionnel comprend en outre au moins un groupe polymérisable résiduel.

5. Composition de polymères photochromiques selon la revendication 4, dans laquelle le groupe polymérisable résiduel est choisi parmi un hydroxyle, un carboxyle, un amino, un mercapto, un anhydride, un époxy, un isocyanato, un acryloxy, un méthacryloxy, un vinyle ou l'une de leurs combinaisons.

6. Composition de polymères photochromiques selon l'une quelconque des revendications précédentes, dans laquelle la substance photochromique (a) comprend un composé photochromique présentant au moins un maximum d'absorption activée dans la plage située entre 400 et 700 nanomètres.

7. Composition de polymères photochromiques selon la revendication 6, dans laquelle le composé photochromique est choisi parmi les chromènes, les spiropyranes, les oxazines, les dithiozonates organométalliques, les fulgides, les fulgimides ou l'un de leurs mélanges.

8. Composition de polymères photochromiques selon l'une quelconque des revendications précédentes, dans laquelle la substance photochromique (a) comprend en outre au moins un groupe de liaison divalent non polymérisable reliant la substance photochromique de base et le groupe polymérisable.

9. Composition de polymères photochromiques selon la revendication 8, dans laquelle le groupe de liaison divalent non polymérisable est choisi parmi un alkylène en C₁ à C₂₀ à chaîne linéaire ou ramifié, un polyoxyalkylène en C₁ à C₄ à chaîne linéaire ou ramifié, un alkylène cyclique en C₃ à C₂₀, le phénylène, le naphtylène, un phénylène substitué par un alkyle en C₁ à C₄, un mono- ou poly-uréthane (alkylène en C₁ à C₂₀), un mono- ou poly-ester(alkylène en C₁ à C₂₀), un mono- ou poly-carbonate (alkylène en C₁ à C₂₀) ou une de leurs combinaisons.

10. Composition de polymères photochromiques selon l'une quelconque des revendications précédentes, dans laquelle la substance copolymérisable (b) est adaptée pour former un polymère par polymérisation possédant une température de transition vitreuse inférieure à 0 °C.

11. Composition de polymères photochromiques selon l'une quelconque des revendications précédentes, dans laquelle la substance copolymérisable (b) peut être polymérisée par rayonnement thermique, rayonnement actinique ou l'une de leurs combinaisons.

12. Composition de polymères photochromiques selon l'une quelconque des revendications précédentes, dans laquelle la substance copolymérisable (b) comprend :
(a) un monomère à insaturation éthylénique ;
(b) un monomère à insaturation éthylénique comprenant au moins un groupe réactif supplémentaire choisi parmi un hydroxyle, un carboxyle, un amino, un mercapto, un vinyle, un acryloxy, un méthacryloxy, un anhydride, un époxy ou un isocyanato ; ou
(c) l'une de leurs combinaisons.

13. Article photochromique comprenant un polymère photochromique polymérisable au moins partiellement durci selon l'une quelconque des revendications 1 à 12.

14. Article photochromique selon la revendication 13, dans lequel l'article comprend un polymérisat au moins partiellement durci de la composition de polymères photochromiques et une substance copolymérisable avec ladite composition de polymères photochromiques polymérisables.

15. Article photochromique selon la revendication 13, dans lequel la composition de polymères photochromiques polymérisables au moins partiellement durcie est sous la forme de particules.

16. Article photochromique selon la revendication 15, dans lequel les particules possèdent une taille moyenne de 0,01 µm à 100 µm.

17. Article photochromique selon la revendication 15, dans lequel les particules sont au moins partiellement revêtues.

18. Article photochromique selon la revendication 17, dans lequel les particules sont au moins partiellement revêtues avec un revêtement protecteur.

19. Article photochromique selon la revendication 18, dans lequel le revêtement protecteur est un revêtement solgel.

20. Article photochromique comprenant une substance polymère hôte au moins partiellement durcie et une quantité photochromique d'au moins une composition de polymères photochromiques selon l'une quelconque des revendications 1 à 12.

21. Article photochromique comprenant un substrat comprenant un revêtement au moins partiel d'une composition de revêtement photochromique au moins partiellement durcie selon l'une quelconque des revendications 1 à 12 sur au moins une surface dudit substrat.

22. Article photochromique selon la revendication 21, dans lequel le substrat comprend du papier, du verre, une céramique, du bois, une maçonnerie, un textile, un métal ou un matériau polymère, moyennant quoi le matériau polymère est de préférence un matériau polymère hôte.

23. Article photochromique selon l'une quelconque des revendications 20 et 22, dans lequel le matériau polymère hôte est un polymère choisi parmi les matériaux polymères thermodurcissables ou thermoplastiques.

24. Article photochromique selon la revendication 21, dans lequel le matériau polymère hôte est un polymère choisi parmi un poly(urée-uréthane), un poly(méthacrylate d'alkyle en C₁ à C₁₂), un diméthacrylate de poly(oxyalkylène), un poly-(méthacrylate de phénol alcoxylé), l'acétate de cellulose, le triacétate de cellulose, le propionate d'acétate de cellulose, le butyrate d'acétate de cellulose, un poly(acétate de vinyle), un poly(alcool vinylique), un poly(chlorure de vinyle), un poly(chlorure de vinylidène), un polycarbonate thermoplastique, un polyester, un polyuréthane, un polysilane, un polysiloxane, un polythiouréthane, un poly(téréphtalate d'éthylène), un polystyrène, un poly(alpha méthylstyrène), un copoly(styrène-méthacrylate de méthyle), un copoly(styrène-acrylonitrile), un polyvinylbutyral et les polymères de monomères de polyol(carbonate d'allyle), de monomères d'acrylate polyfonctionnel, de monomères de méthacrylate polyfonctionnel, de monomères de diméthacrylate de diéthylène glycol, de monomères de diisopropénylbenzène, de monomères de diméthacrylate de bisphénol A éthoxylé, de monomères de bisméthacrylate d'éthylène glycol, de monomères de bisméthacrylate de poly(éthylène glycol), de monomères de méthacrylate de phénol éthoxylé, de monomères d'acrylate d'alcool polyhydrique alcoxylé, de monomères de diallylidène pentaérythritol, de monomères d'acrylate d'uréthane, de monomères de vinylbenzène, de monomères de styrène ou l'un de leurs mélanges.

25. Article photochromique selon la revendication 21, dans lequel la composition de revêtement photochromique au moins partiellement durcie comprend une composition de polymère filmogène.

26. Article photochromique selon la revendication 25, dans lequel la composition de polymère filmogène comprend un polymère filmogène thermoplastique ou thermodurcissable.

27. Article photochromique selon la revendication 26, dans lequel le polymère filmogène est un polymère thermodurcissable et est choisi parmi les polyuréthanes, les résines aminoplastes, les poly(méth)acrylates, les polyanhydrides, les polyacrylamides, les résines époxy ou les polysilanes.

28. Article photochromique selon la revendication 21, comprenant en outre un revêtement au moins partiel d'une composition de couche primaire interposée entre la composition de revêtement photochromique au moins partiellement durcie et le substrat.

29. Article photochromique selon la revendication 28, comprenant en outre un revêtement au moins partiel d'un revêtement protecteur au moins partiellement appliqué sur la surface de la composition de revêtement photochromique au moins partiellement durcie.

30. Article photochromique selon l'une quelconque des revendications 21 à 29, dans lequel l'article photochromique est un élément optique.

31. Article photochromique selon la revendication 30, dans lequel l'élément optique est une lentille ophtalmique ou une lentille de contact.
